# EUROPEAN PATENT APPLICATION

(11) **EP 2 950 518 A1**
(43) Date of publication of application: **02.12.2015**
(21) Application number: 13872588.2
(22) Date of filing: 21.11.2013
(51) Int. Cl.: H04N 5/225, G03B 17/00, G03B 17/04, G03B 17/18, G06F 3/048, H04N 5/232

(54) **ELECTRONIC DEVICE**

(30) Priority: 28.01.2013 JP 2013013653; 28.01.2013 JP 2013013652; 28.01.2013 JP 2013013651
(71) Applicant: Nikon Corporation, Tokyo 108-6290 (JP)
(72) Inventor: YOSHINO, Kaoru, Tokyo 100-8331 (JP); KASAI, Hiroshi, Tokyo 100-8331 (JP); SASHIMA, Tomoyuki, Tokyo 100-8331 (JP); ITO, Mayuko, Tokyo 100-8331 (JP); TSURUTA, Kaori, Tokyo 100-8331 (JP); SEKIGUCHI, Masakazu, Tokyo 100-8331 (JP); KAMEHARA, Hiroshi, Tokyo 100-8331 (JP); MURAKOSHI, Yu, Tokyo 100-8331 (JP)
(74) Representative: Whitlock, Holly Elizabeth Ann
(86) International application number: PCT/JP2013/081416
(87) International publication number: WO 2014/115413

(57) **Abstract**

To provide a user-friendly electronic device, the electronic device includes: a first unit (200D) including a first operation unit (211); a second unit (100D) attachable to/detachable from the first unit; and a control unit (224) configured to make presentation of the first operation unit in a state where the first unit and the second unit are attached to each other different from presentation of the first operation unit in a state where the first unit and the second unit are detached from each other.

## Description

### TECHNICAL FIELD

The present invention relates to electronic devices.

### BACKGROUND ART

There has been conventionally suggested a wireless communication camera including an image capture device and a display device separate from the image capture device (e.g., see Patent Document 1).

### PRIOR ART DOCUMENTS

### PATENT DOCUMENTS

Patent Document 1: Japanese Patent Application Publication No. 2006-325150

### SUMMARY OF THE INVENTION

### PROBLEMS TO BE SOLVED BY THE INVENTION

However, the conventional wireless communication camera fails to have the sufficiently considered operability in a state where the image capture device and the display device are detached from each other and in a state where they are attached to each other, and thus sometimes is not user friendly.

The present invention has been made in view of the above problems, and aims to provide a user-friendly electronic device.

### MEANS FOR SOLVING THE PROBLEMS

The electronic device of the present invention includes: a first unit including a first operation unit; a second unit attachable to/detachable from the first unit; and a control unit configured to make presentation of the first operation unit in a state where the first unit and the second unit are attached to each other different from presentation of the first operation unit in a state where the first unit and the second unit are detached from each other.

In the above configuration, the first operation unit may include a touch panel. Furthermore, in the above configuration, the first operation unit may display an image used to receive an operation for a predetermined function of the second unit when the first unit and the second unit are detached from each other.

Additionally, in the present invention, the second unit may include: a second operation unit; an optical system including a driving member; and a first drive unit and a second drive unit that drive the optical system, the optical system may be driven by the second drive unit via the second operation unit when the first unit and the second unit are attached to each other, and the optical system may be driven by the first drive unit via the first operation unit when the first unit and the second unit are detached from each other.

Additionally, the electronic device of the present invention is an electronic device including: a first unit including a first operation unit; and a second unit attachable to/detachable from the first unit, wherein a configuration of the first operation unit in a state where the first unit and the second unit are detached from each other differs from a configuration of the first operation unit in a state where the first unit and the second unit are attached to each other.

Additionally, the electronic device of the present invention is an electronic device including: a first unit including a first operation unit having a touch panel; and a second unit including a second operation unit and being attachable to/detachable from the first unit, the second operation unit having a touch panel, wherein presentation of the first operation unit differs from presentation of the second operation unit when the first unit and the second unit are detached from each other.

In the above configuration, the electronic device may include a restriction unit configured to restrict an operation of the first unit when the first unit and the second unit are detached from each other.

Additionally, in the present invention, the electronic device may include a restriction unit configured to restrict an operation of the second unit when the first unit and the second unit are detached from each other.

Additionally, the electronic device of the present invention is an electronic device attachable to/detachable from an apparatus that achieves a predetermined function, and the electronic device includes: an operation unit; a control unit configured to permit reception of an operation for the predetermined function via the operation unit when the electronic device is detached from the apparatus.

The electronic device of the present invention includes: a first unit including an operation unit; and a second unit including a display and being attachable to/detachable from the first unit, wherein the second unit presents a configuration of the operation unit of the first unit on the display when the first unit and the second unit are detached from each other.

In the above configuration, the display of the second unit may include a touch panel.

Additionally, in the present invention, the operation unit may include a touch panel, and the second unit may display presentation of the operation unit of the first unit on the display when the first unit and the second unit are detached from each other. Additionally, in the present invention, the operation unit may include a button member, and the second unit may display an image of the button member of the operation unit of the first unit on the display in a manner that the button member is laid out in the first unit when the first unit and the second unit are detached from each other.

Additionally, in the present invention, the second unit may present the configuration of the operation unit of the first unit on the display by enlarging or reducing when the first unit and the second unit are detached from each other.

Additionally, in the present invention, the electronic device may include an image capture unit, wherein each of the first unit and the second unit includes an image capture instruction unit that issues an instruction on image capture to the image capture unit.

Additionally, in the present invention, the electronic device may include: an engaging unit that engages the first unit with the second unit; and a detection unit configured to detect an attachment/detachment of the first unit to/from the second unit in accordance with an engaged state of the engaging unit. In the above configuration, a communication unit configured to establish communication between the first unit and the second unit in a state where the first unit is engaged with the second unit.

Additionally, in the present invention, one of the first unit and the second unit may include: a display capable of displaying an image; a transmit unit configured to transmit data on the image to another of the first unit and the second unit before the image is displayed on the display; and a receive unit configured to receive restriction information on display of the image from the device. In the above configuration, one of the first unit and the second unit may include an engaging unit capable of being engaged with the another of the first unit and the second unit, and the transmit unit transmits the data on the image to the another of the first unit and the second unit when the engaging unit is not engaged with the another of the first unit and the second unit.

Additionally, in the present invention, the transmit unit may transmit, while a first image is displayed on the display, data on a second image to the another of the first unit and the second unit, a display order of the second image being posterior to a display order of the first image. Additionally, in the present invention, the transmit unit may transmit data on a predetermined number of images to the another of the first unit and the second unit. Additionally, in the present invention, the transmit unit may transmit data having a size less than a size of the image to be displayed as the data on the image.

Additionally, in the present invention, the transmit unit and the receive unit may communicate with the another of the first unit and the second unit via the engaging unit when the engaging unit is engaged with the another of the first unit and the second unit, and the transmit unit and the receive unit may wireless communicate with the another of the first unit and the second unit when the engaging unit is not engaged with the another of the first unit and the second unit.

Additionally, in the present invention, one of the first unit and the second unit may include a projection unit that projects the image, and the transmit unit may transmit the data on the image to the another of the first unit and the second unit before projection by the projection unit.

Additionally, in the present invention, one of the first unit and the second unit may include: a setting unit configured to set restriction information for at least one of data on an image received from another of the first unit and the second unit and data on an image stored in a storing unit; and a transmit unit configured to transmit the restriction information to the another of the first unit and the second unit. In the above configuration, the setting unit may set, while a first image is displayed on the another of the first unit and the second unit, the restriction information for a second image of which a display order is posterior to a display order of the first image, and the restriction information may include information that restricts display of the image.

### EFFECTS OF THE INVENTION

The present invention has an advantage in providing a user-friendly electronic device.

### BRIEF DESCRIPTION OF DRAWINGS

FIG. 1 is a block diagram illustrating a configuration of an electronic device in accordance with a first embodiment;
FIG. 2A and FIG. 2B are diagrams illustrating a state where an image capture unit is engaged with a display unit in the electronic device of the first embodiment, and FIG. 2C and FIG. 2D are diagrams illustrating a state where the image capture unit and the display unit are detached from each other;
FIG. 3 is a flowchart of an exemplary process executed by a control unit of the display unit;
FIG. 4 is a flowchart of an exemplary process executed by a control unit of the image capture unit;
FIG. 5A illustrates an image for operation displayed on a display of the display unit, and FIG. 5B is an image for operation displayed on a display of the image capture unit;
FIG. 6A is a flowchart of an exemplary process of restricting the display of an image executed by the control unit of the image capture unit, and FIG. 6B is a flowchart of an exemplary process of restricting the display of an image executed by the control unit of the display unit;
FIG. 7A is a diagram illustrating a screen used to select an image of which the display is restricted, FIG. 7B is a diagram illustrating a restriction information table, and FIG. 7C is a diagram illustrating images displayed on the display unit;
FIG. 8A and FIG. 8B are flowcharts for explaining a first variation of the first embodiment;
FIG. 9 is a block diagram illustrating a configuration of an electronic device in accordance with a second variation of the first embodiment;
FIG. 10A and FIG. 10B are diagrams illustrating a state where an image capture unit is engaged with a display unit in the electronic device of the second variation of the first embodiment, and FIG. 10C and FIG. 10D are diagrams illustrating a state where the image capture unit and the display unit are detached from each other;
FIG. 11 is a block diagram illustrating a configuration of an electronic device in accordance with a third variation of the first embodiment;
FIG. 12A and FIG. 12B are diagrams illustrating a state where an image capture unit is engaged with a display unit in the electronic device of the third variation of the first embodiment, and FIG. 12C and FIG. 12D are diagrams illustrating a state where the image capture unit and the display unit are detached from each other;
FIG. 13A through FIG. 13C are diagrams illustrating an engaged state and a detached state of the image capture unit and the display unit when the display unit is accommodated in the image capture unit in the electronic device of the third variation of the first embodiment;
FIG. 14 is a block diagram illustrating a configuration of an electronic device in accordance with a second embodiment;
FIG. 15A is a diagram illustrating a state where an image capture unit is engaged with a display unit in the electronic device of the second embodiment, and FIG. 15B and FIG. 15C are diagrams illustrating a state where the image capture unit and the display unit are detached from each other;
FIG. 16 is a flowchart of an exemplary process executed by the display unit of the second embodiment; and
FIG. 17 is a flowchart of an exemplary process executed by the image capture +unit of the second embodiment.

### MODES FOR CARRYING OUT THE INVENTION

### «First Embodiment»

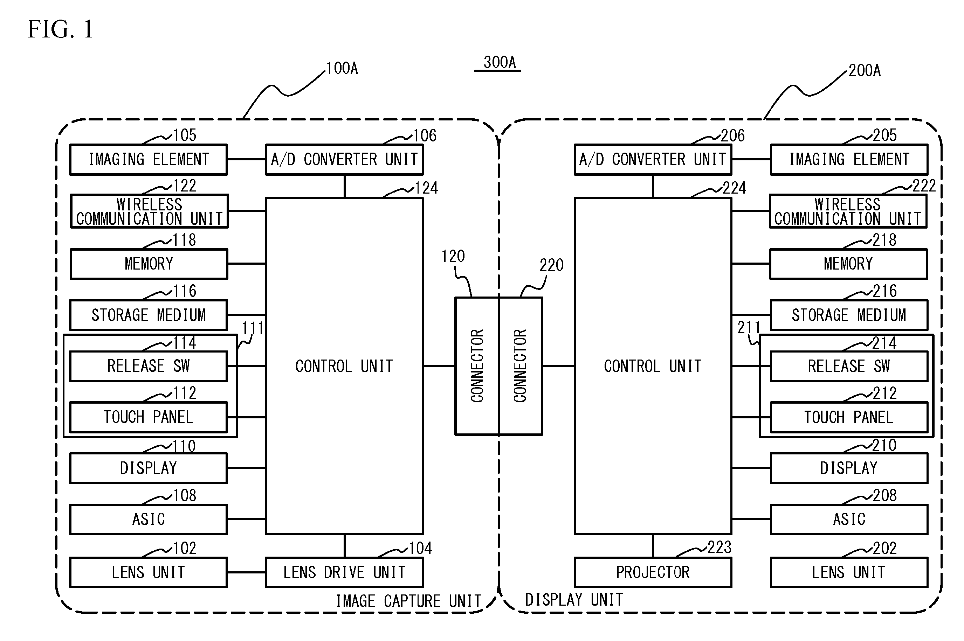

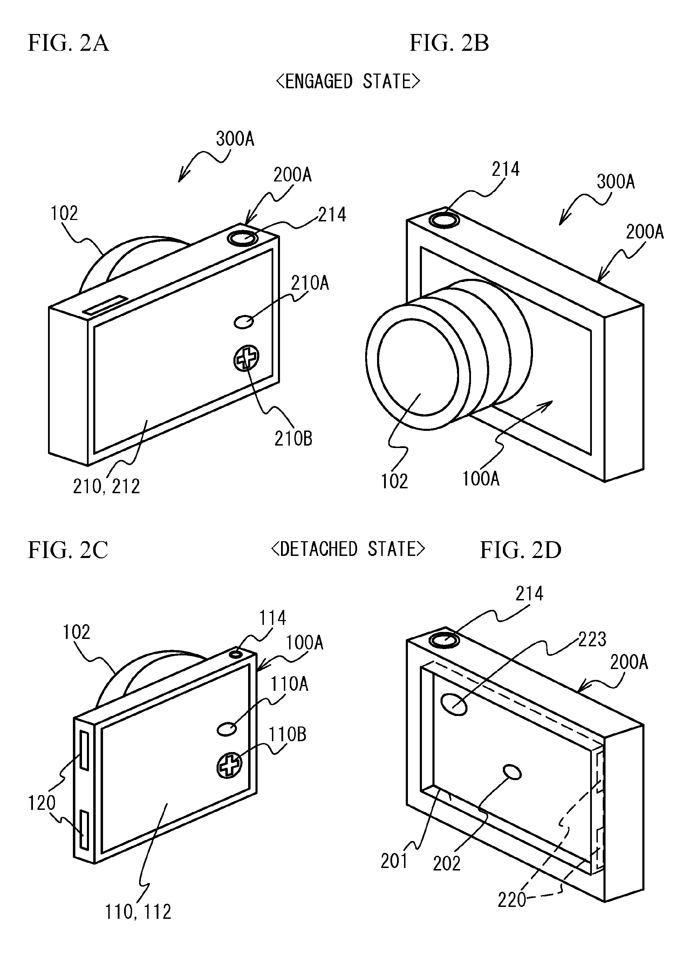

Hereinafter, a detailed description will be given of a first embodiment based on FIG. 1 through FIG. 7C. FIG. 1 is a block diagram illustrating a configuration of an electronic device 300A in accordance with the first embodiment. FIG. 2A and FIG. 2B are diagrams illustrating a state where an image capture unit 100A and a display unit 200A included in the electronic device 300A are engaged with each other (hereinafter, referred to as an engaged state), and FIG. 2C and FIG. 2D are diagrams illustrating a state where the image capture unit 100A and the display unit 200A included in the electronic device 300A are detached from each other (hereinafter, referred to as a detached state).

As illustrated in FIG. 1, the electronic device 300A includes the image capture unit 100A and the display unit 200A. The electronic device 300A of the present embodiment has an "image capture mode" that allows the user to capture images with the image capture unit 100A or the display unit 200A and a "viewing mode" that allows the user to view image data, and the user can switch the mode to use as appropriate.

### (Image capture unit 100A)

The image capture unit 100A is accommodated in a recessed portion 201 (see FIG. 2D) provided to the display unit 200A in the engaged state as illustrated in FIG. 2A and FIG. 2B.

The image capture unit 100A includes a lens unit 102, a lens drive unit 104, an imaging element 105, an A/D (Analog/Digital) converter unit 106, an ASIC (Application Specific Integrated Circuit) 108, a display 110, an operation unit 111, a storage medium 116, a memory 118, a connector 120, a wireless communication unit 122, and a control unit 124 as illustrated in FIG. 1. The image capture unit 100A may be any type of single-lens reflex cameras, mirrorless cameras, and compact cameras.

The lens unit 102 is composed of multiple lens groups including a zoom lens and a focusing lens, and provides the image of a subject on the imaging area of the imaging element 105 in response to the operation of a release switch (SW) 114 and a release SW 214 described later.

The lens drive unit 104 includes, for example, a motor or an actuator, and drives the lens unit 102 for zooming or focusing. The lens drive unit 104 also has a transmission mechanism that transmits manual operation by the user via an operation ring or the like to the lens unit 102. The lens unit 102 and the lens drive unit 104 may be capable of being detached from the image capture unit 100A, or being replaced.

The imaging element 105 includes a CMOS (Complementary Metal Oxide Semiconductor) image sensor, where photosensitive elements are arranged in a matrix in the imaging area, or the like, and generates analog image signals.

The A/D converter unit 106 converts the analog image signals generated by the imaging element 105 to digital image signals, and outputs them to the control unit 124.

The ASIC 108 is a circuit that applies various types of image processing, such as color interpolation processing, gradation converting processing, contour emphasis processing, white balance adjusting processing, image compression processing, and image decompression processing, to the digital image signals input from the control unit 124. The image data processed by the ASIC 108 (e.g., data for thumbnail display, or main image data having higher resolution than the data for thumbnail display) is displayed on the display 110 or stored in the storage medium 116 under the control of the control unit 124.

The display 110 is, for example, an LCD (Liquid Crystal Display), and displays various types of setting information for the image capture unit 100A, an operation menu and icons used to operate the image capture unit 100A. The display 110 also displays a live view image (a through image) based on the output from the ASIC 108, and still images and moving images stored in the storage medium 116 described later.

The operation unit 111 includes, for example, a touch panel 112 and the release SW 114. In the present embodiment, the operation unit 111 receives an operation for the image capture unit 100A from the user.

The touch panel 112 is located on the display 110 or embedded in the display 110, detects a touch operation on the surface of the display 110 by the user to receive the input of various information. That is to say, the user can operate the image capture unit 100A by touching the operation menu or the icon displayed on the display 110. The touch panel 112 may be used as a substitute for the release SW 114 described later. In this case, the image of a subject is formed on the imaging area of the imaging element 105 through the lens unit 102 in response to the operation to the through image displayed on the display 110. In the present embodiment, the touch panel 112 is hidden by the display unit 200A in the engaged state (see FIG. 2B), and thus is used only in the detached state.

The release SW 114 is a switch operated (pressed) by the user, for example, when the user issues an instruction of the capture of a still image. In the present embodiment, the release SW 114 is hidden by the display unit 200A in the engaged state (see FIG. 2B), and thus is used only in the detached state.

The storage medium 116 is, for example, an SD card, and stores data of still images and data of moving images. The storage medium 116 can be attached to/detached from the image capture unit 100A (a card slot not illustrated).

The memory 118 is a non-volatile semiconductor memory (e.g., a flash memory), and stores programs for controlling the image capture unit 100A executed by the control unit 124 and parameters.

The connector 120 can be engaged with a connector 220 of the display unit 200A described later, and electrically connects the image capture unit 100A and the display unit 200A. This allows for communication and data transmission/reception between the image capture unit 100A and the display unit 200A. In the present embodiment, the connector 120 is located on the side surface of the housing of the image capture unit 100A as illustrated in FIG. 2C. The position where the connector 120 is located, and the number of contact points may be determined as appropriate.

The wireless communication unit 122 allows for communication and data transmission/reception between the image capture unit 100A and the display unit 200A instead of the aforementioned connector 120 when the image capture unit 100A and the display unit 200A are in the detached state.

The control unit 124 includes a CPU (Central Processing Unit), and overall controls the image capture unit 100A. The process executed by the control unit 124 will be described later.

### (Display unit 200A)

The display unit 200A includes a lens unit 202, an imaging element 205, an A/D converter unit 206, an ASIC 208, a display 210, an operation unit 211, a storage medium 216, a memory 218, the connector 220, a wireless communication unit 222, a projector 223, and a control unit 224, as illustrated in FIG. 1.

The lens unit 202 is composed of multiple lens groups including a zoom lens and a focusing lens, and provides the image of a subject on the imaging area of the imaging element included in the imaging element 205 in response to the operation of the release SW 214 described later. In the present embodiment, the lens unit 202 is hidden by the image capture unit 100A in the engaged state, and thus is not used in the engaged state.

The imaging element 205 includes a CMOS image sensor, where photosensitive elements are arranged in a matrix in the imaging area, or the like, and generates analog image signals.

The A/D converter unit 206 converts the analog image signals generated from the imaging element 205 to digital image signals, and outputs them to the control unit 224.

The ASIC 208 applies various types of image processing to the digital image signals input from the control unit 224. The image data processed by the ASIC 208 is displayed on the display 210 or stored in the storage medium 216 under the control of the control unit 224.

The display 210 is, for example, an LCD, and displays various types of setting information for the image capture unit 100A and an operation menu and an icon used to operate the image capture unit 100A in the engaged state. Additionally, the display 210 displays a live view image (a through image) based on the output from the ASIC 208, or still images or moving images stored in the storage medium 116 or the storage medium 216. Furthermore, the display 210 displays various types of setting information for the display unit 200A, and an operation menu and an icon used to operate the display unit 200A in the detached state. Additionally, the display 210 displays a live view image (a through image) based on an analog image output from the imaging element 205, or still images and moving images stored in the storage medium 216 described later in the detached state.

The operation unit 211 includes a touch panel 212 and the release SW 214. The operation unit 211 receives an operation for the image capture unit 100A or the display unit 200A from the user.

The touch panel 212 is located on the display 210 or embedded in the display 210. The touch panel 212 detects a touch operation on the surface of the display 210 by the user to receive the input of various information. Thus, the user can operate the image capture unit 100A or the display unit 200A by touching the operation menu or the icon displayed on the display 210. The touch panel 212 may be used as a substitute for the release SW 214 described later.

The release SW 214 is a switch operated (pressed) by the user when the user issues an instruction of the capture of a still image.

The storage medium 216 is, for example, an SD card, and stores data of still images and data of moving images. The storage medium 216 can be attached to/detached from the display unit 200A (a card slot not illustrated).

The memory 218 is a non-volatile semiconductor memory (e.g., a flash memory), and stores programs for controlling the display unit 200A executed by the control unit 224 and parameters.

The connector 220 can be engaged with the connector 120 of the image capture unit 100A described previously, and electrically connects the image capture unit 100A and the display unit 200A. This allows for communication and data transmission/reception between the image capture unit 100A and the display unit 200A. In the present embodiment, the connector 220 is located in a position corresponding to the connector 120 on the side surface of the recessed portion 201 accommodating the image capture unit 100A, as illustrated in FIG. 2D. The position where the connector 220 is located, and the number of contact points may be determined as appropriate so as to correspond to those of the connector 120.

The wireless communication unit 222 allows for communication and data transmission/reception between the image capture unit 100A and the display unit 200A instead of the aforementioned connector 220 when the image capture unit 100A and the display unit 200A are in the detached state.

The projector 223 projects still images and moving images stored in the storage medium 216 on a screen or a wall. In the present embodiment, the projector 223 is located on the bottom surface of the recessed portion 201 provided to the display unit 200A. The position where the projector 223 is located in the display unit 200A may be determined as appropriate, and may be located on, for example, the frame around the recessed portion 201.

The control unit 224 includes a CPU, overall controls the display unit 200A, and performs cooperative control with the control unit 124 when the display unit 200A and the image capture unit 100A are in the engaged state. Furthermore, the control unit 124 performs the control in accordance with the mode of the electronic device 300A (image capture mode, viewing mode).

### (Process executed by the control unit 224 of the display unit 200A)

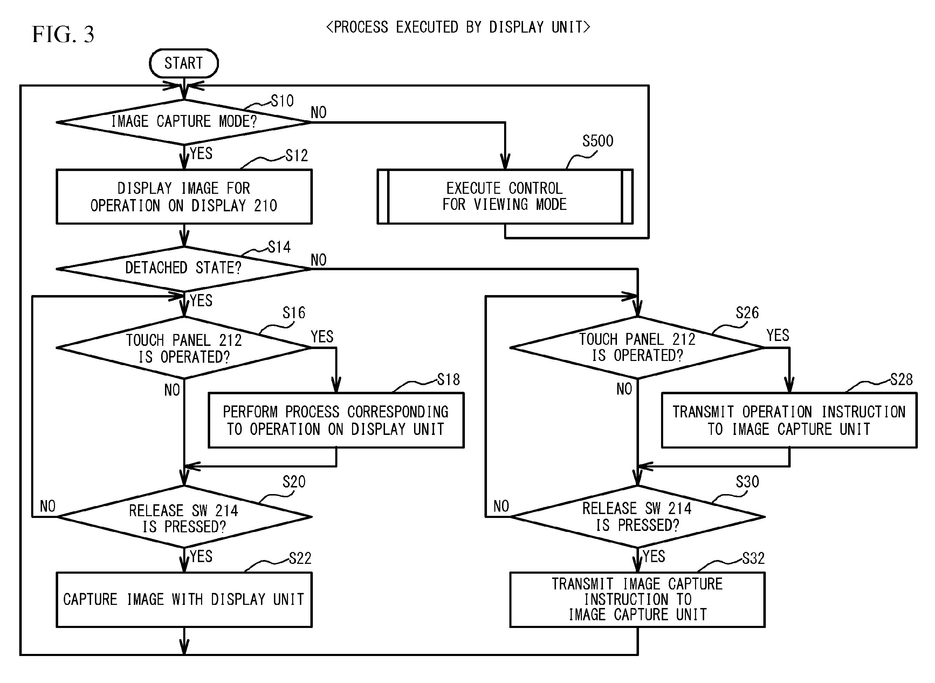

A description will next be given of an exemplary process executed by the control unit 224 of the display unit 200A with reference to the flowchart of FIG. 3. In the present embodiment, the process of FIG. 3 is started when the power of the electronic device 300A is switched on.

In the process of FIG. 3, at step S10, the control unit 224 determines whether the electronic device 300A is in the "image capture mode" of the "image capture mode" and the "viewing mode". When the determination is YES, i.e., when the electronic device 300A is in the image capture mode, the control unit 224 moves to step S12. The image capture mode and the viewing mode may be switched by the user via the operation through the touch panel 112 of the image capture unit 100A or the touch panel 212 of the display unit 200A. Alternatively, the image capture mode may be set in the engaged state and the viewing mode may be set in the detached state by default. Alternatively, the mode used when the power of the electronic device 300A was switched off last time may be set when the power of the electronic device 300A is switched on.

At step S12, the control unit 224 displays an image (an image for operation) including an operation menu and an icon used to operate the electronic device 300A on the display 210. This allows the display 210 to function as the operation screen of the touch panel 212. In the present embodiment, the image for operation of the electronic device 300A includes, for example, a menu icon 210A used to configure various settings related to image capture, and a cross icon 210B used to select the left, right, top, and bottom or to switch the image capture mode and the viewing mode (see FIG. 2A). FIG. 2A illustrates only the single menu icon 210A, but multiple menu icons may be displayed.

At subsequent step S14, the control unit 224 determines whether the image capture unit 100A and the display unit 200A are in the detached state. Whether the image capture unit 100A and the display unit 200A are in the detached state may be determined by determining whether the connector 120 and the connector 220 are engaged with each other, or may be determined by the communication intensity (radio field intensity) between the image capture unit 100A and the display unit 200A when each of the image capture unit 100A and the display unit 200A includes an IC (Integrated Circuit) tag reader. When the determination is YES, i.e., when the image capture unit 100A and the display unit 200A are in the detached state, the control unit 224 moves to step S16. In the present embodiment, when moving to step S16, i.e., when the image capture mode is set and the units 100A, 200A are in the detached state, the control unit 224 executes an image capture process using the display unit 200A.

At step S16, the control unit 224 determines whether the touch panel 212 is operated. When the determination is YES, i.e., when the touch panel 212 is operated by the user, the process moves to step S18. At step S18, the control unit 224 performs the process corresponding to the operation received at step S16 on the display unit 200A, and moves to step S20.

On the other hand, when the touch panel 212 is not operated by the user and the determination at step S16 is thus NO, the control unit 224 moves to step S20.

At step S20, the control unit 224 determines whether the release SW 214 is pressed. When the determination is YES, i.e., when the release SW 214 is pressed, the control unit 224 captures an image with the imaging element 205 of the display unit 200A at step S22, and then returns to step S10.

On the other hand, when the release SW 214 is not pressed by the user and the determination at step S20 is thus NO, the process returns to step S16. The processes of steps S16 ∼ S20 are repeated till the release SW 214 is pressed. However, this does not intend to suggest any limitation, and the control unit 224 may return to step S14 when the determination at step S20 is NO.

When the determination at step S14 is NO, i.e., when the image capture unit 100A and the display unit 200A are in the engaged state, the control unit 224 moves to step S26. In the present embodiment, when moving to step S26, i.e., when the image capture mode is set and the units 100A, 200A are in the engaged state, the control unit 224 performs an image capture process using the image capture unit 100A.

At step S26, the control unit 224 determines whether the touch panel 212 is operated by the user. When the determination is NO, the control unit 224 moves to step S30. On the other hand, when the determination at step S26 is YES, the control unit 224 transmits the instruction (operation instruction) corresponding to the operation received via the touch panel 212 at step S28 to the control unit 124 of the image capture unit 100A through the connectors 120, 220, and moves to step S30. The control unit 124 of the image capture unit 100A that has received the operation instruction controls the image capture unit 100A based on the operation instruction.

When the determination at step S26 is NO, or after step S28, the control unit 224 moves to step S30, and determines whether the release SW 214 is pressed. While the determination is NO, the control unit 224 returns to step S26, and repeats the process and the determination of steps S26 ∼ S30. On the other hand, when the determination at step S30 is YES, the control unit 224 moves to step S32, and transmits an image capture instruction to the control unit 124 of the image capture unit 100A through the connectors 120, 220. The control unit 124 of the image capture unit 100A that has received the image capture instruction controls the components of the image capture unit 100A to capture an image. When the process of step S32 is completed, the control unit 224 returns to step S10.

In FIG. 3, the control unit 224 returns to step S26 when the determination at step S30 is NO, but this does not intend to suggest any limitation, and the control unit 224 may return to step S14.

When the determination at step S10 is NO, i.e., the electronic device 300A is not in the image capture mode but in the "viewing mode", the control unit 224 moves to step S500, and performs a control for the viewing mode. The process executed by the control unit 224 when the electronic device 300A is in the viewing mode will be described later.

When the process of step S500 is completed, the control unit 224 returns to step S10. The process of FIG. 3 is repeated as described above till the power of the electronic device 300A is switched off.

### (Process executed by the control unit 124 of the image capture unit 100A)

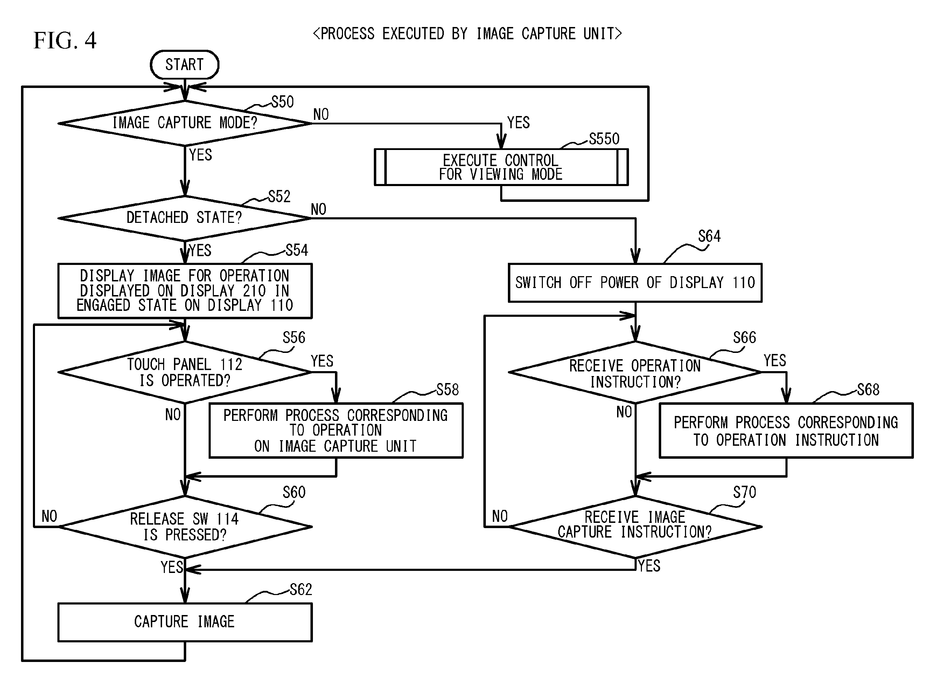

A description will next be given of a process executed by the control unit 124 of the image capture unit 100A. FIG. 4 is a flowchart of an exemplary process executed by the control unit 124 of the image capture unit 100A. In the present embodiment, the process of FIG. 4 is started when the power of the electronic device 300A is switched on.

In the process of FIG. 4, at step S50 the control unit 124 determines whether the electronic device 300A is in the "image capture mode" of the "image capture mode" and the "viewing mode". When the determination is YES, i.e., when the electronic device 300A is in the image capture mode, the control unit 124 moves to step S52.

At step S52, the control unit 124 determines whether the image capture unit 100A and the display unit 200A are in the detached state. When the determination is YES, the control unit 124 moves to step S54. In the present embodiment, when moving to step S54, i.e., when the image capture mode is set and the units 100A, 200A are in the detached state, the control unit 124 performs the image capture process using the image capture unit 100A.

At step S54, the control unit 124 displays the same image as the image for operation displayed on the display 210 of the display unit 200A in the engaged state on the display 110 in similar size. For example, in the present embodiment, as illustrated in FIG. 2A, the menu icon 210A and the cross icon 210B are displayed on the display 210 in the engaged state. Thus, the control unit 124 displays, as illustrated in FIG. 2C, a menu icon 110A corresponding to the menu icon 210A and a cross icon 110B corresponding to the cross icon 210B on the display 110. Accordingly, the operation screen of the touch panel 212 in the engaged state becomes the same as the operation screen of the touch panel 112 in the detached state. Therefore, the user can operate the image capture unit 100A with the operation screen (user interface) same as that in the engaged state in the detached state, and thus can easily operate the image capture unit 100A and finds it to be user-friendly.

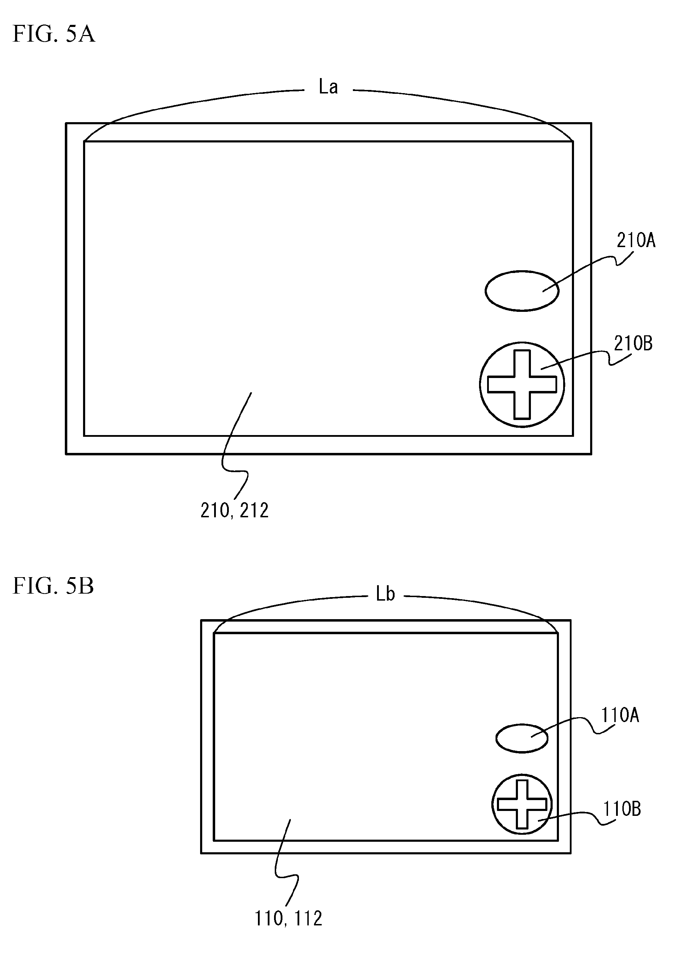

Here, at step S54, the control unit 124 may display the enlarged or reduced image for operation on the display 110. For example, as illustrated in FIG. 5A and FIG. 5B, assume that the screen size of the display 210 (horizontal dimension = La) is greater than the screen size of the display 110 (horizontal dimension = Lb) (La > Lb). In such a case, the control unit 124 may reduce the dimensions of the menu icon 210A and the cross icon 210B to be displayed on the display 210 (Lb/La) times, and then display them on the display 110. This enables to make the configuration of the operation screen of the touch panel 212 almost the same as the configuration of the operation screen of the touch panel 112, allowing the user to operate the touch panel 112 of the image capture unit 100A without any feeling of strangeness. The dimension of the icon displayed on the display 210 may be determined based on the vertical dimensions of the displays 110, 210, or may be determined based on the area ratio of the screen sizes of the displays 110, 210.

Back to FIG. 4, at step S56, the control unit 124 determines whether the touch panel 112 of the image capture unit 100A is operated. When the determination is YES, the control unit 124 moves to step S58, performs the process corresponding to the operation received at step S56 on the image capture unit 100A, and moves to step S60.

On the other hand, when the determination at step S56 is NO, i.e., when the touch panel 112 is not operated by the user, the control unit 124 moves to step S60, and determines whether the release SW 114 is pressed. While the determination is NO, the process and the determination of steps S56 ∼ S60 are repeated, and when the determination becomes YES (when the release SW 114 is pressed), the control unit 124 captures an image at step S62, and returns to step S50.

In FIG. 4, the control unit 124 returns to step S56 when the determination at step S60 is NO, but this does not intend to suggest any limitation, and the control unit 124 may return to step S52.

When the determination at step S52 is NO, i.e., when the image capture unit 100A and the display unit 200A are in the engaged state, the control unit 124 moves to step S64. In the present embodiment, when moving to step S64, i.e., when the image capture mode is set and the units 100A, 200A are in the engaged state, the control unit 124 performs the image capture process using the image capture unit 100A based on the instruction from the display unit 200A.

At step S64, the control unit 124 switches off the power of the display 110. The reason why the power of the display 110 is switched off is because the display 110 is hidden by the display unit 200A and is not used by the user in the state where the units 100A, 200A are engaged with each other (see FIG. 2A, FIG. 2B). The above-described control enables to reduce the electrical power consumption. The control unit 124 may not switch off the power of the display 110 at step S64. In this case, the control unit 124 may shift the display 110 to a power saving mode of which the electrical power consumption is less than that in normal use.

At subsequent step S66, the control unit 124 determines whether the touch panel 212 of the display unit 200A is operated by the user and the control unit 124 thus receives an operation instruction from the control unit 224 of the display unit 200A. When the determination is NO, the control unit 124 moves to step S70. On the other hand, when the determination at step S66 is YES, the control unit 124 moves to step S68, performs the process corresponding to the received operation instruction on the image capture unit 100A, and moves to step S70.

When the determination at step S66 is NO, or after step S68, the control unit 124 moves to step S70 and determines whether the release SW 214 is pressed by the user and the control unit 124 thus receives an image capture instruction from the control unit 224 of the display unit 200A. While the determination is NO, the control unit 124 returns to step S66, and repeats the process and the determination of steps S66 ∼ S70. On the other hand, when the determination at step S70 is YES, the control unit 224 moves to step S62, and captures an image. The control unit 124 then returns to step S50.

When the determination at step S50 is NO, i.e., when the electronic device 300A is not in the image capture mode but in the "viewing mode", the control unit 124 moves to step S550, performs a control for the viewing mode, and returns to step S50. The process of FIG. 4 is repeated as described above till the power of the electronic device 300A is switched off.

### (Control for the viewing mode)

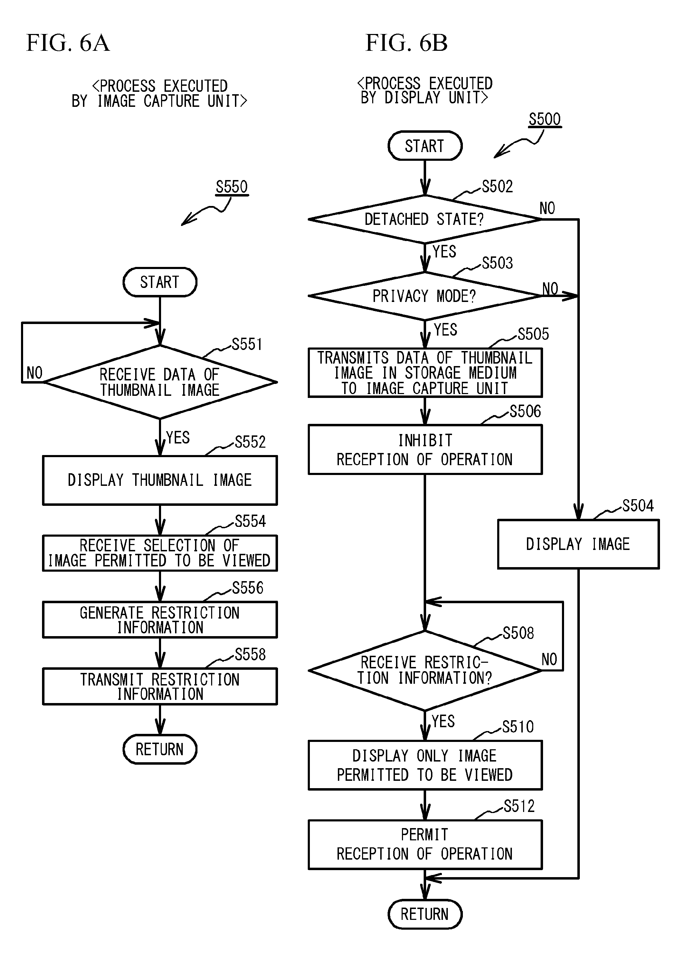

A description will next be given of processes executed by the control unit 124 of the image capture unit 100A and the control unit 224 of the display unit 200A when the electronic device 300A is in the viewing mode (step S500 of FIG. 3, step S550 of FIG. 4) with flowcharts of FIG. 6A and FIG. 6B.

In the present embodiment, when the electronic device 300A is in the viewing mode, a "privacy mode" that permits the viewing of certain images selected by the user (the owner of the electronic device 300A) can be selected in addition to a "normal viewing mode" that permits the viewing of all images in the electronic device 300A. Assume that the "privacy mode" can be selected when the image capture unit 100A and the display unit 200A are in the detached state. The privacy mode is used to protect the privacy of the owner, personal information, and portrait rights.

FIG. 6A is a flowchart of a process executed by the control unit 124 of the image capture unit 100A when the electronic device 300A is in the viewing mode, i.e., a detailed process of step S550 in FIG. 4. FIG. 6B is a flowchart of a process executed by the control unit 224 of the display unit 200A when the electronic device 300A is in the viewing mode, i.e., a detailed process of step S500 in FIG. 3.

In the process of FIG. 6B, at step S502, the control unit 224 of the display unit 200A determines whether the image capture unit 100A and the display unit 200A are in the detached state. When the determination is NO (in the case of the engaged state), the control unit 224 moves to step S504, and displays image data selected by the user on the display 210 among image data stored in the storage medium 116 and the storage medium 216. Then, the process of the FIG. 6 is ended, and returns to step S10 in FIG. 3.

On the other hand, when the determination at step S502 is YES (in the case of the detached state), the control unit 224 moves to step S503. In the following description, assume that a user X who is the owner of the electronic device 300A holds the image capture unit 100A, and another user Y holds the display unit 200A in the detached state. Additionally, assume that the user Y can view image data stored in the storage medium 216 of the display unit 200A in the detached state.

At step S503, the control unit 224 determines whether the "privacy mode" is set. When the determination is NO (when the normal viewing mode is set), the process moves to step S504, and when the determination is YES (when the privacy mode is set), the process moves to step S505. At step S505, the control unit 224 transmits image data stored in the storage medium 216 to the image capture unit 100A. The image data transmitted to the image capture unit 100A may be the data of a thumbnail image having a size less than the data of a main image to be displayed on the display 210. Additionally, the image data may be transmitted one by one, or every a predetermined number of images. In the present embodiment, the data of all thumbnail images stored in the storage medium 216 is transmitted to the image capture unit 100A.

At subsequent step S506, the control unit 224 inhibits the reception of the user operation via the touch panel 212. This enables to temporarily inhibit the user Y from manipulating the image data stored in the storage medium 216 of the display unit 200A.

On the other hand, the control unit 124 of the image capture unit 100A waits till the control unit 124 receives the data of thumbnail images from the display unit 200A at step S551. When the data of thumbnail image is transmitted from the control unit 224 of the display unit 200A, the process moves to step S552.

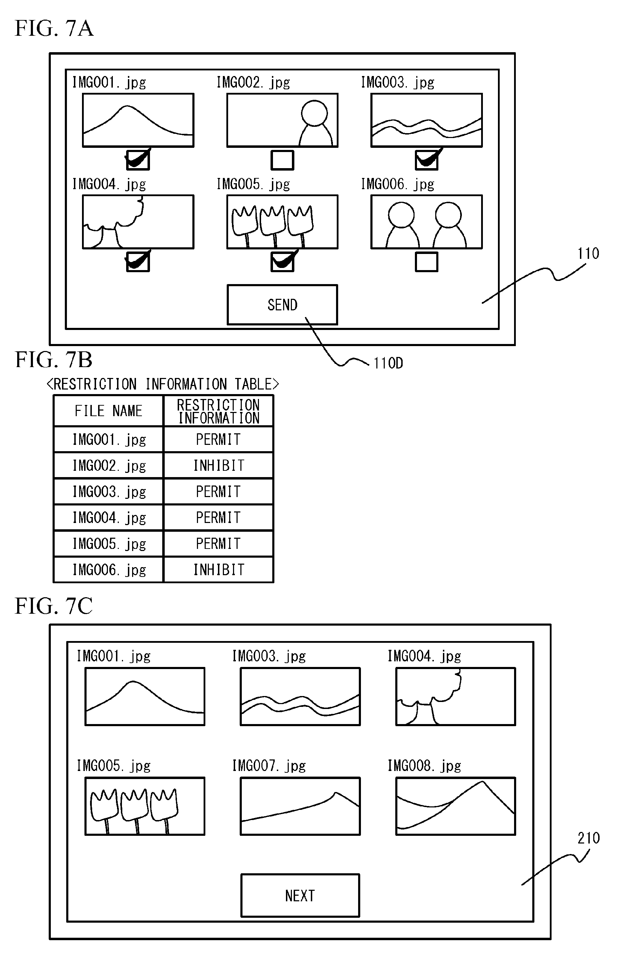

At step S552, the control unit 124 displays the received thumbnail images on the display 110 (see FIG. 7A). At step S554, the control unit 124 receives the selection of images permitted to be viewed by the user Y from the owner of the electronic device 300A (the user X). In the present embodiment, the control unit 124 receives the selection of images permitted to be viewed by the user Y via the touch panel 112. For example, when the user X touches thumbnail images displayed on the display 110 via the touch panel 112 as illustrated in FIG. 7A, the check boxes located under the images are checked, and the viewing of the image data is permitted. In FIG. 7A, IMG001.jpg, IMG003.jpg, IMG004.jpg, and IMG005.jpg are selected as the image permitted to be viewed by the user Y. The control unit 124 may receive the selection of images inhibited from being displayed (viewed) instead of the selection of images permitted to be displayed (viewed).

At subsequent step S556, the control unit 124 generates restriction information based on the selection result at step S554. In the present embodiment, the control unit 124 generates the restriction information at a timing when the user X presses a send button 110D illustrated in FIG. 7A. Here, the control unit 124 may generate a list of the file names of images permitted to be displayed as the restriction information. Alternatively, a list of the file names of images inhibited from being displayed may be generated as the restriction information. Yet alternatively, the control unit 124 may generate a restriction information table that associates "file name" with "restriction information (permit/inhibit)" as the restriction information, as illustrated in FIG. 7B.

At subsequent step S558, the control unit 124 transmits the generated restriction information to the display unit 200A to end the process of FIG. 6A, and returns to step S50 in FIG. 4.

On the other hand, the control unit 224 of the display unit 200A waits till the control unit 224 receives the restriction information from the image capture unit 100A at step S508 after inhibiting the reception of the operation from the user at step S506. Thus, when step S558 is executed in the control unit 124, the control unit 224 moves to step S510.

At step S510, the control unit 224 displays only the images permitted to be displayed on the display 210. For example, when image data IMG002.jpg, IMG006.jpg are inhibited from being viewed as illustrated in FIG. 7A, the control unit 224 displays images other than IMG002.jpg, IMG006.jpg on the display 210 as illustrated in FIG. 7C.

At subsequent step S512, the control unit 224 permits the reception of the operation from the user Y via the touch panel 212. More specifically, operations that allow the user Y to view images (frame return/frame advance operation, display of main image, and the like) are permitted. In this case, the user Y can perform only the operation to the images permitted to be viewed. The operation input to the touch panel 212 may be limited to frame return/frame advance, scaling, rotation, and the like to prevent the images from being modified by the user Y.

When the entire process of FIG. 6B is ended as described above, the process returns to step S10 in FIG. 3.

As described in detail above, according to the first embodiment, the electronic device 300A includes the display unit 200A including the touch panel 212 as the operation unit 211, and the image capture unit 100A including the display 110 and being attachable to/detachable from the display unit 200A. When the image capture unit 100A and the display unit 200A are detached from each other, the control unit 124 of the image capture unit 100A displays the image displayed on the display 210 of the display unit 200A in the engaged state (the operation screen of the touch panel 212) on the display 110. This makes the operation screen of the touch panel 212 in the engaged state the same as the operation screen of the touch panel 112 in the detached state, and thus allows the user to operate the image capture unit 100A with the user interface same as that in the engaged state in the detached state. Therefore, the operability of the image capture unit 100A is improved, and eventually the usability of the electronic device 300A is improved.

Additionally, in the first embodiment, when the image capture unit 100A and the display unit 200A are detached from each other, the control unit 124 displays a reduced image of the image for operation displayed on the display 210 of the display unit 200A in the engaged state (the operation screen of the touch panel 212) on the display 110 of the image capture unit 100A (see FIG. 5A, FIG. 5B). This makes the configuration of the operation screen of the touch panel 212 (the ratio of the operation image to the screen) in the engaged state the same as the configuration of the operation screen of the touch panel 112 (the ratio of the operation image to the screen) in the detached state, and thus provides the user interface that does not give the user any feeling of strangeness. Accordingly, the user can operate the touch panel 112 of the image capture unit 100A without any feeling of strangeness in the detached state.

Additionally, in the first embodiment, the electronic device 300A includes the imaging element 105, and the image capture unit 100A and the display unit 200A respectively include the release SW 114 and the release SW 214 that issue an image capture instruction to the imaging element 105. Thus, the image capture instruction to the imaging element 105 can be issued both in the engaged state and in the detached state.

Additionally, in the first embodiment, the electronic device 300A includes the connectors 120, 220 that engage the image capture unit 100A with the display unit 200A, and the control unit 124 and the control unit 224 detect the detachment of the image capture unit 100A from the display unit 200A in accordance with the engaged state of the connectors 120, 220. Thus, the appropriate controls in accordance with the detached state and the engaged state can be performed without using a dedicated sensor for detecting the engagement and the detachment.

Additionally, in the first embodiment, when the image capture unit 100A and the display unit 200A are engaged with each other, the control unit 124 of the image capture unit 100A communicates with the control unit 224 of the display unit 200A through the connectors 120, 220. This allows for the wire communication between the image capture unit 100A and the display unit 200A in the engaged state, enabling the stable data transmission/reception.

Additionally, in the first embodiment, the control unit 224 of the display unit 200A transmits the data of a thumbnail image to the image capture unit 100A before displaying an image on the display 210, and receives restriction information on the display of the image from the image capture unit 100A. This restricts the viewing (display) of the image that the user does not want others to see when the display unit 200A is used as a display terminal for viewing images.

Additionally, in the first embodiment, the control unit 224 transmits the data on an image to the image capture unit 100A when the connector 220 is not engaged with the connector 120 of the image capture unit 100A. This makes it possible to restrict the viewing of images by the user of the display unit 200A when the image capture unit 100A and the display unit 200A are detached from each other, i.e., when a user other than the owner of the electronic device 300A is likely to hold the display unit 200A. In addition, as the display unit 200A in the detached state acts as a viewer device, the user Y other than the owner of the electronic device 300A can watch the images by simple operation specialized for a viewer device, and does not need to be careful not to touch or damage the lens unit 102.

Additionally, in the first embodiment, the control unit 224 transmits the data of thumbnail images having a size less than a size of the data of main images to be displayed on the display 210 to the image capture unit 100A. Thus, the time required to transmit image data can be reduced, and thereby the time for the images to be displayed on the display 210 can be reduced.

Additionally, in the first embodiment, the control unit 224 communicates with the image capture unit 100A through the connectors 220, 120 when the connector 220 is engaged with the connector 120, and wireless communicates with the image capture unit 100A with use of the wireless communication unit 222 when the connector 220 is not engaged with the connector 120. This allows for stable data transmission/reception by wire communication when the connector 220 is engaged with the connector 120, and furthermore, the viewing of the image by the user of the display unit 200A can be restricted via wireless communication even in the detached state.

Additionally, in the first embodiment, the control unit 124 of the image capture unit 100A sets restriction information for a thumbnail image, and transmits the restriction information to the display unit 200A. This enables to set the restriction information, which restricts the display of the image, with use of the image capture unit 100A, which is a terminal different from the display unit 200A, and thereby enables to restrict the viewing of the image without making the user Y (viewer) of the display unit 200A notice that there are images of which the viewing is restricted. In addition, only the images permitted to be viewed are displayed on the display of the display unit 200A, and thus the viewer can view the image by operating the display unit 200A without any feeling of strangeness.

The processes of FIG. 6A and FIG. 6B of the above first embodiment inhibits the display of the image on the display 210 of the display unit 200A, but do not intend to suggest any limitation. The projection of the image by the projector 223 may be inhibited, for example. In this case, at step S505 in FIG. 6B, during the projection preparation period after the operation to start the projector 223 is performed by a viewer (time from when the start operation is performed to when the projector 223 becomes in a state capable of projecting), the data of thumbnail images may be transmitted to the image capture unit 100A. This enables to effectively use the projection preparation period for setting the restriction information and performing a transmission process.

Additionally, in the above first embodiment, the process moves to step S506 after the data of all thumbnail images is transmitted to the image capture unit 100A at step S505 in FIG. 6B, but this does not intend to suggest any limitation. For example, when the data of a predetermined number (e.g., ten) of thumbnail images is transmitted, the process may move to step S506. In this case, when restriction information for the predetermined number of thumbnail images is received at step S508, the process may move to step S510. Additionally, while an image based on the restriction information is displayed, transmission of unsent data of thumbnail images and acquisition of restriction information may be performed to improve the efficiency of processing. The above-described processing enables to reduce the time for the image to be displayed (waiting time) as much as possible even when a large quantity of image data is in the storage medium 216.

Additionally, in the above first embodiment, the control unit 224 of the display unit 200A displays the image on the display 210 based on the restriction information from the image capture unit 100A, but this does not intend to suggest any limitation. For example, the image capture unit 100A may be used as a remote control of the display unit 200A, and the image to be projected by the projector 223 of the display unit 200A may be directly selected in the image capture unit 100A. In this case, the selection of the image to be subsequently displayed may be received in the image capture unit 100A while an image is projected by the projector 223.

The above first embodiment describes that the image capture mode or the viewing mode is set for the whole of the electronic device, but does not intend to suggest any limitation. The mode set for one of the image capture unit and the display unit may be set for the other. For example, when the display unit shifts to the viewing mode, the image capture unit may shift to the viewing mode. Additionally, different modes may be set in the image capture unit and the display unit, for example.

In the above first embodiment, the image capture unit 100A and the display unit 200A capture still images in response to the operations of the release SWs 114, 214 (step S62 of FIG. 4, step S22 of FIG. 3), but this does not intend to suggest any limitation, and may start to capture a moving image in response to the operations of the release SWs 114, 214. Additionally, a dedicated switch for capturing a moving image may be provided.

### (First variation)

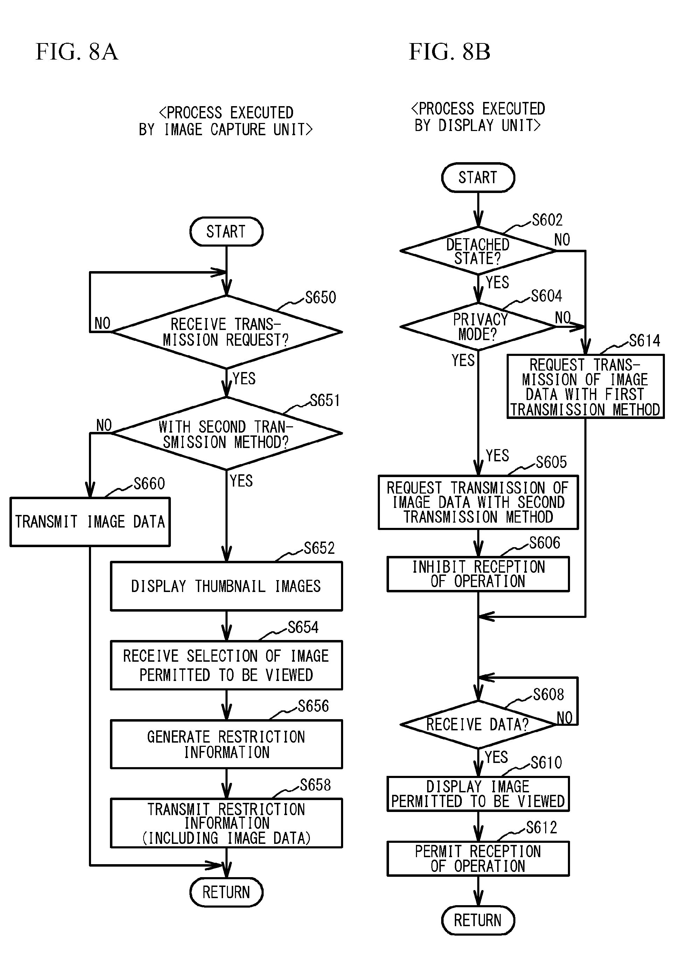

The above first embodiment describes the case where the user Y of the display unit 200A views images stored in the storage medium 216 of the display unit 200A in the detached state, but does not intend to suggest any limitation. In the detached state, the user Y using the display unit 200A may view an image stored in the storage medium 116 of the image capture unit 100A, and in this case, the processes of FIG. 8A, FIG. 8B are executed instead of the processes of FIG. 6A, FIG. 6B.

The following describes the processes of FIG. 8A, FIG. 8B.

In FIG. 8B, at step S602, the control unit 224 of the display unit 200A determines whether the image capture unit 100A and the display unit 200A are in the detached state. When the determination is NO, the control unit 224 moves to step S614, and requests the control unit 124 of the image capture unit 100A to transmit image data (e.g., main image data and thumbnail image data) with a first transmission method. The first transmission method means a method of transmitting an image requested by the user of the display unit 200A without restricting the viewing. After step S614, the process moves to step S608.

On the other hand, when the determination at step S602 is YES (in the case of the detached state), whether the "privacy mode" is set is determined at step S604. When the determination is NO, the control unit 224 moves to step S614, and requests the control unit 124 of the image capture unit 100A to transmit image data with the first transmission method as described above. On the other hand, when the determination at step S604 is YES (when the privacy mode is set), the control unit 224 moves to step S605, and requests the control unit 124 of the image capture unit 100A to transmit image data (e.g., main image data and thumbnail image data) with a second transmission method. The second transmission method means a method of transmitting image data on which a view restriction is set in the image capture unit 100A. After step S605, the process moves to step S606.

At step S606, the control unit 224 inhibits the reception of the operation as with in the above first embodiment. Additionally, when moving to step S608, the control unit 224 waits till the control unit 224 receives image data (and restriction information) from the image capture unit 100A.

The control unit 124 of the image capture unit 100A waits till a transmission request is transmitted from the control unit 224 of the display unit 200A at step S650, and moves to step S651 upon receiving the transmission request. At step S651, whether the transmission request is a transmission request with the second transmission method is determined. When the determination is NO, the control unit 124 moves to step S660, and transmits image data stored in the storage medium 116 to the control unit 224 of the display unit 200A without changing. On the other hand, when the determination at step S651 is YES (when the second transmission method is requested), the process moves to step S652, and thumbnail images stored in the storage medium 116 are displayed on the display 110 of the image capture unit 100A.

At subsequent step S654, as with at step S554 of FIG. 6A, the control unit 124 receives the selection of images permitted to be viewed, and generates restriction information at subsequent step S656 as with at step S556 of FIG. 6. Furthermore, at step S658, the control unit 124 transmits the restriction information (including image data) to the control unit 224 of the display unit 200A. At step S658, the control unit 124 may not transmit image data on which the view restriction is set to the control unit 224. The process of FIG. 8A is ended as described above.

As described above, when step S658 or S660 is executed, the determination at step S608 of FIG. 8B becomes YES, and the process moves to step S610. At step S610, the control unit 224 displays the received image. In this case, the control unit 224 does not display the image with which the restriction information is received together. At step S612, the process of permitting the reception of the operation is executed as with at step S512 of FIG. 6B. This ends the process of FIG. 6B.

As described above, in the first variation, the execution of the above-described process enables to restrict the viewing of image data in the storage medium 116 of the image capture unit 100A in the detached state.

In the above first embodiment and first variation, the user holding the image capture unit 100A selects images on which the view restriction is set, but this does not intend to suggest any limitation. For example, the control unit 124 may automatically determine images permitted to be viewed from image data based on a predetermined rule. The rule in this case may be a rule that permits an image that does not include a person to be viewed by using a face detection function not illustrated. The rule may be set as desired.

When the control unit 124 automatically determines images permitted to be viewed based on the detection results of the face detection function not illustrated as described above, the user may check the determination results before the images are displayed. Additionally, the user may change the determination results.

In the above first embodiment and the first variation, the control unit 224 displays only the images permitted to be viewed on the display 210, but this does not intend to suggest any limitation. For example, in the display unit 200A, the image inhibited from being displayed may be viewed by inputting a predetermined password. Additionally, the images inhibited from being viewed may be permitted to be viewed by a user whose fingerprint is registered in the display unit 200A in advance by using a technology such as fingerprint authentication.

In the above first embodiment and the first variation, the restriction information is information used to restrict the viewing (display) of an image, but this does not intend to suggest any limitation. The restriction information may be information used to restrict, for example, the editing of an image.

### (Second variation)

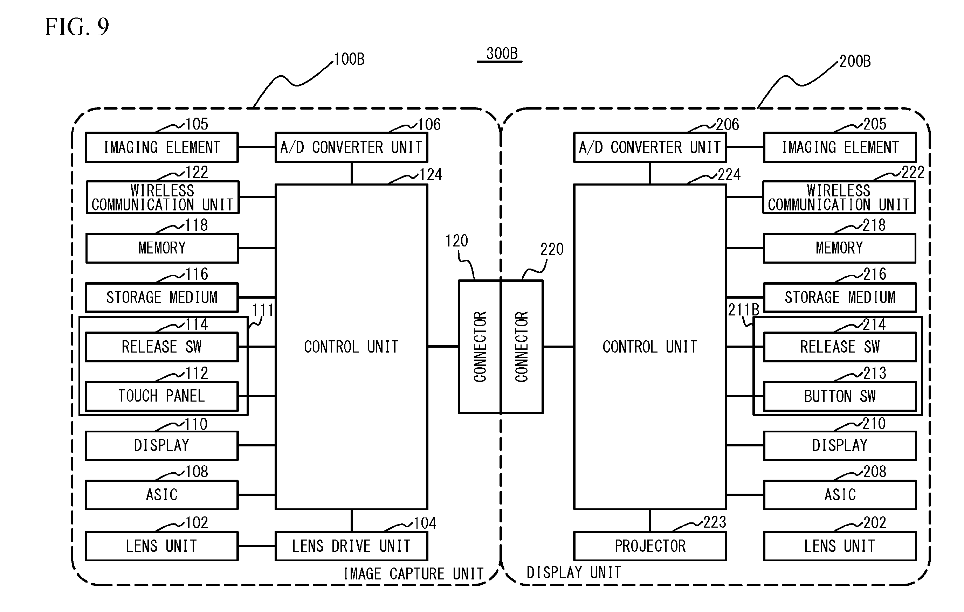

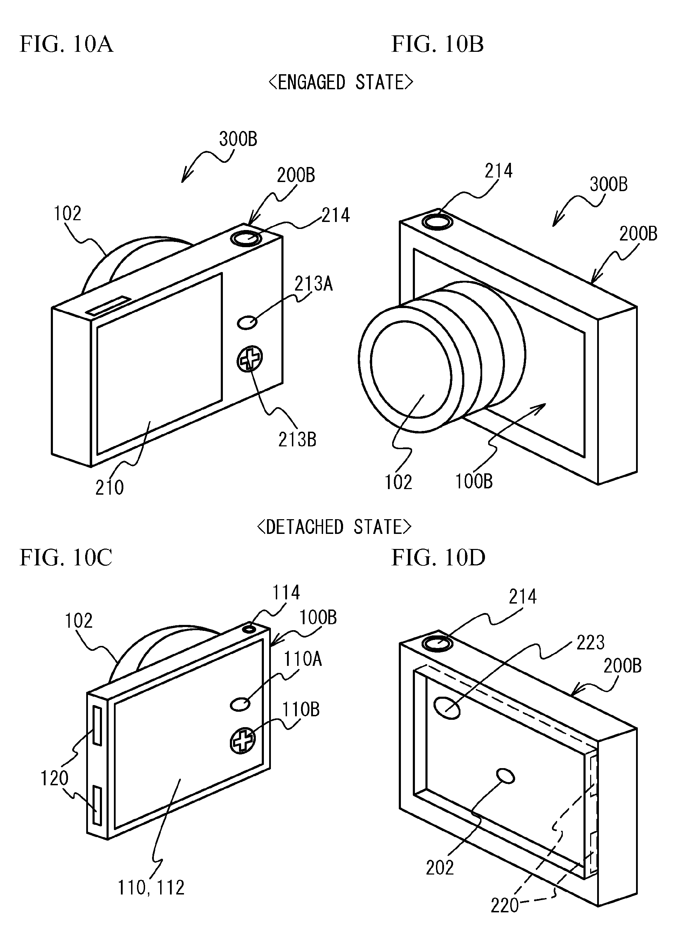

FIG. 9 is a block diagram illustrating a configuration of an electronic device 300B (an image capture unit 100B, a display unit 200B) in accordance with a second variation of the first embodiment. Additionally, FIG. 10A and FIG. 10B illustrate the electronic device 300B in the engaged state, and FIG. 10C and FIG. 10D illustrate the electronic device 300B in the detached state.

In the second variation, an operation unit 211B of the display unit 200B includes a button SW 213 and the release SW 214. The button SW 213 is an operation member used to receive an operation for the display unit 200B and the image +capture unit 100B from the user, and is a substitute for the touch panel 212 of the above first embodiment. In the second variation, the button SW 213 includes, as illustrated in FIG. 10A, a menu button 213A and a cross button 213B, and is located at the rear side of the housing of the display unit 200B and the right side of the display 210.

Other configurations are the same as those of the above first embodiment.

The process executed by the display unit 200B is almost the same as the process of FIG. 3, but differs in that the process related to the operation to the touch panel is substituted by the process related to the operation to the button SW 213. Additionally, the process executed by the image capture unit 100B is almost the same as the process of FIG. 4, but partly differs in the process at step S54.

More specifically, at step S54, the control unit 224 displays the images of the menu button 213A and the cross button 213B on the display 110. For example, the images of the menu button 213A and the cross button 213B laid out as illustrated in FIG. 10A (the menu icon 110A and the cross icon 110B) are displayed on the display 110 so that the layout in the display unit 200A is reproduced (see FIG. 10C). This allows the user to operate the image capture unit 100B by using icons corresponding to the menu button 213A and the cross button 213B laid out in the display unit 200B in the detached state, thereby allowing the user to easily operate the image capture unit 100B. Accordingly, the operability of the electronic device 300B is improved. In the second variation, the touch panel 112 may bulge in the part where the menu icon 110A and the cross icon 110B are displayed to provide an operational feeling of the button member.

### (Third variation)

In the above first embodiment and first and second variations, the control unit 124 of the image capture unit makes the configuration of the display 110 the same as the configuration of the operation units 211, 211 B of the display unit, but this does not intend to suggest any limitation. As described hereinafter, the control unit 224 of the display unit may make the configuration of the display 210 the same as the configuration of the operation unit of the image capture unit.

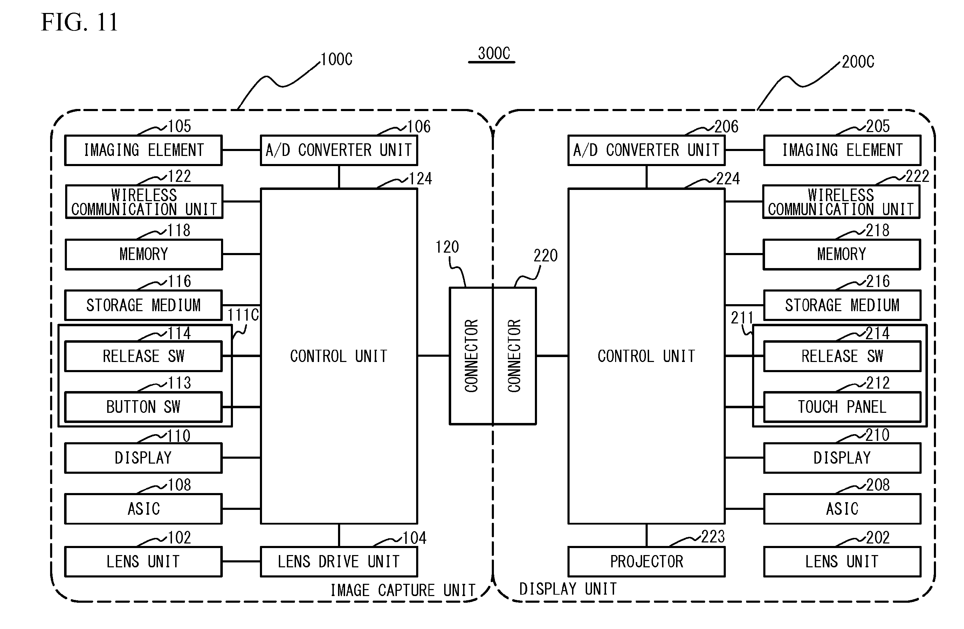

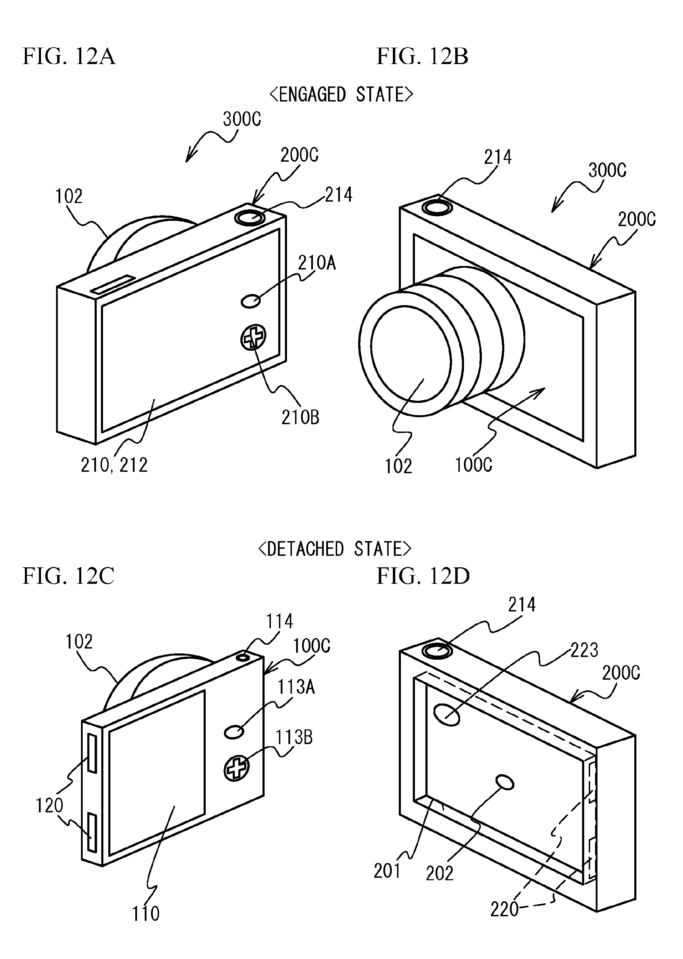

FIG. 11 is a block diagram illustrating a configuration of an electronic device 300C (an image capture unit 100C, a display unit 200C) in accordance with a third variation. Additionally, FIG. 12A and FIG. 12B illustrate the electronic device 300C in the engaged state, and FIG. 12C and FIG. 12D illustrate the electronic device 300C in the detached state.

In the third variation, an operation unit 111C of the image capture unit 100C includes a button SW 113 and the release SW 114. The button SW 113 is an operation member used to receive an operation for the image capture unit 100C from the user, and is a substitute for the touch panel 112 of the above first embodiment. In the third variation, the button SW 113 includes, as illustrated in FIG. 12C, a menu button 113A and a cross button 113B, and is located at the rear side of the housing of the image capture unit 100C and the right side of the display 110.

Other configurations are the same as those of the above first embodiment.

The process executed by the control unit 124 of the image capture unit 100C is almost the same as the process of FIG. 4, but differs in that the process related to the operation to the touch panel is substituted by the process related to the operation to the button SW 213, and in that a normal screen (such as a menu screen) is displayed in the process of step S54. On the other hand, the process executed by the display unit 200C is almost the same as the process of FIG. 3, but differs in that the images of the menu button 113A and the cross button 113B are displayed on the display 210 in the process of step S12.

As described above, according to the third variation, the electronic device 300C includes the image capture unit 100C including the operation unit 111C, and the display unit 200C including the display 210 and being attachable to/detachable from the image capture unit 100C. When the image capture unit 100C and the display unit 200C are detached from each other, the display unit 200C presents the configuration of the operation unit 111C of the image capture unit 100C on the display 210, thereby allowing the user to operate the image capture unit 100C by using the same user interface as that in the engaged state in the detached state. Accordingly, the operability of the electronic device 300C is improved, and its usability is improved.

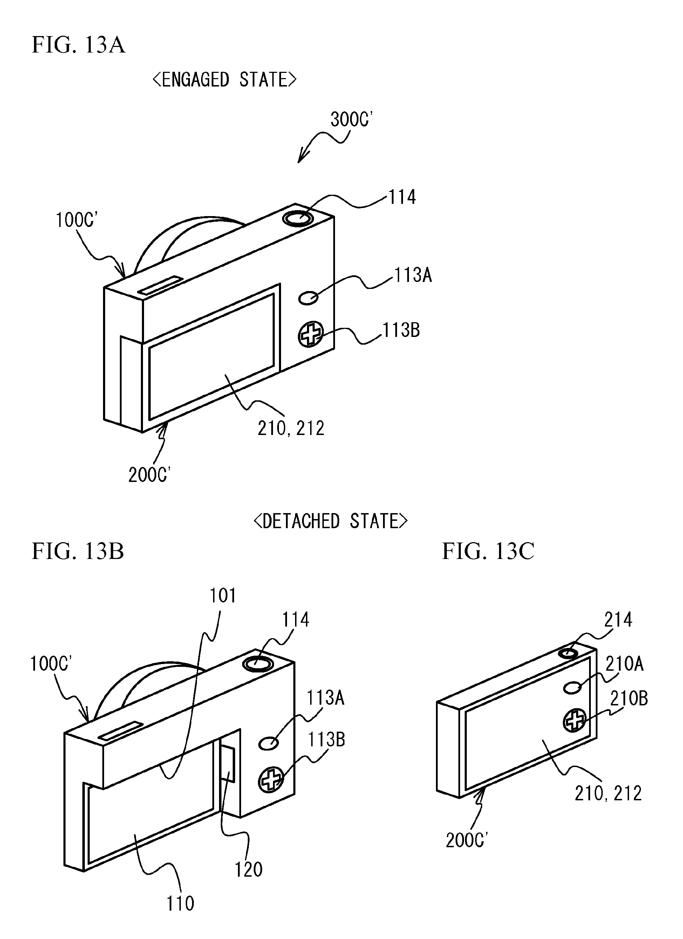

In the above third variation, in the engaged state, the image capture unit 100C is accommodated in a part of the display unit 200C (the recessed portion 201) (see FIG. 12A, FIG. 12B), but this does not intend to suggest any limitation. The display unit may be accommodated in a part of the image capture unit. For example, as illustrated in FIG. 13A through FIG. 13C, a recessed portion 101 may be located at the rear side of an image capture unit 100C', and a display unit 200C' may be slidably located in (attachable to/detachable from) the recessed portion 101. In this case, the control unit 224 of the display unit 200C' does not display the images of the menu button 113A and the cross button 113B on the display 210 in the engaged state (see FIG. 13A), and displays the menu icon 210A and the cross icon 210B corresponding to the menu button 113A and the cross button 113B on the display 210 in the detached state (see FIG. 13C). Such a control enables to obtain the effect same as the effect of the above third variation.

In the first embodiment and each variation, when the image capture unit and the display unit are in the detached state, the image displayed on the display of the display unit may be synchronized with the image displayed on the display of the image capture unit. For example, in the first embodiment, the image for operation displayed on the display 110 of the image capture unit 100A in the detached state may be displayed on the display 210 of the display unit 200A. This allows the user (e.g., a parent) of the display unit 200A to monitor the operation that the user (e.g., a child) of the image capture unit 100A made in the image capture unit 100A. Alternatively, the through image being displayed on the display 110 of the image capture unit 100A may be displayed on the display 210 of the display unit 200A. This allows the user (e.g., a parent) of the display unit 200A to check the subject that the user (e.g., a child) of the image capture unit 100A is about to photograph through the display unit 200A.

### «Second embodiment»

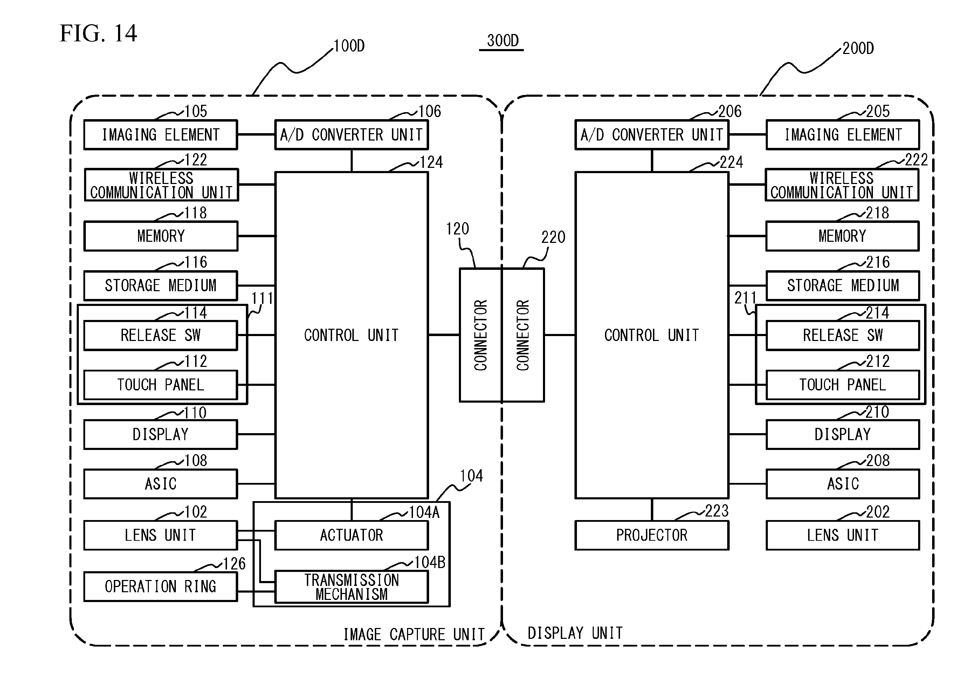

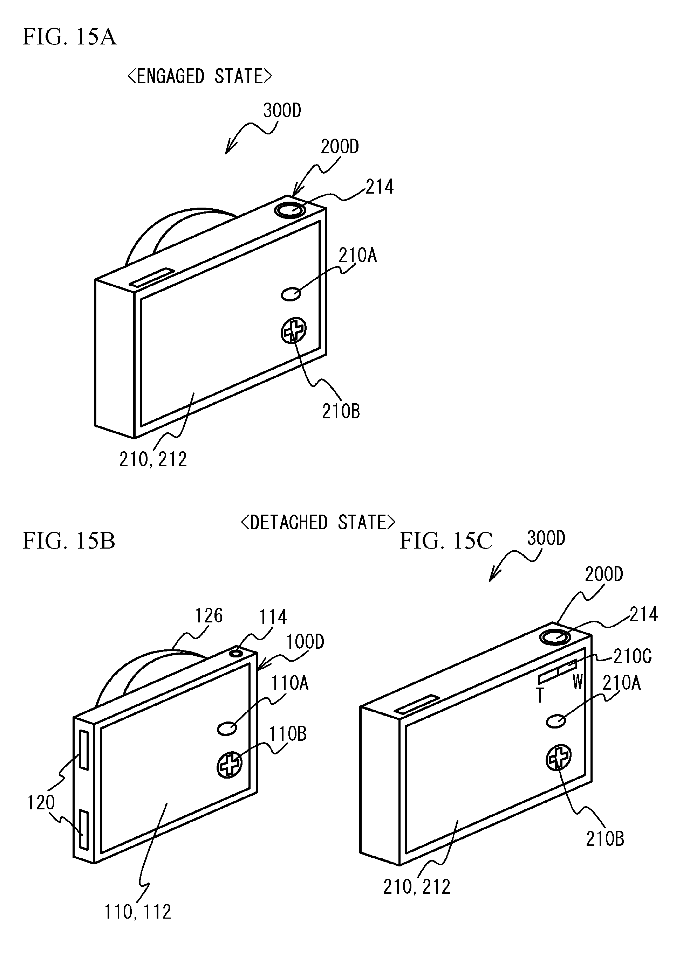

A description will next be given of a second embodiment. FIG. 14 is a block diagram illustrating a configuration of an electronic device 300D in accordance with the second embodiment. FIG. 15A illustrates the electronic device 300D in the engaged state, and FIG. 15B and FIG. 15C illustrate the electronic device 300D in the detached state.

As illustrated in FIG. 14, the electronic device 300D includes an image capture unit 100D and a display unit 200D.

### (Image capture unit 100D)

As is clear from the comparison with the image capture unit 100A of the first embodiment (FIG. 1), the image capture unit 100D has the same configuration as that of the image capture unit 100A except that the image capture unit 100D includes an operation ring 126 and the lens drive unit 104 includes an actuator 104A and a transmission mechanism 104B. The same reference numerals are assigned to the components same as or similar to those of the image capture unit 100A of the first embodiment, and the description of them is omitted.

The operation ring 126 is a ring-shaped member used for zoom operation of the lens unit 102. When the user rotates the operation ring 126, the lens unit 102 moves along the optical axis via the transmission mechanism 104B. The operated amount of the operation ring 126 by the user is input to the control unit 124, and the control unit 124 uses the input operated amount to recognize the lens position and calculate the focal distance.

The actuator 104A of the lens drive unit 104 drives the lens unit 102 based on the input from the user or the like under the control of the control unit 124.

### (Display unit 200D)

+The display unit 200D has the same configuration as the display unit 200A of the first embodiment. Thus, hereinafter, the same reference numerals are assigned to the components of the display unit 200D same as those of the display unit 200A.

### (Process)

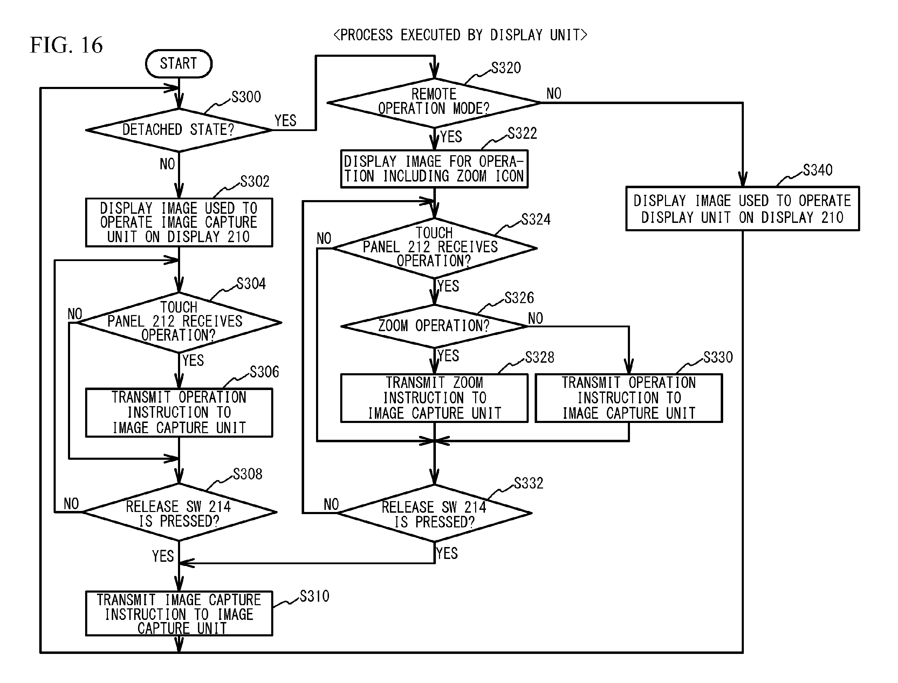

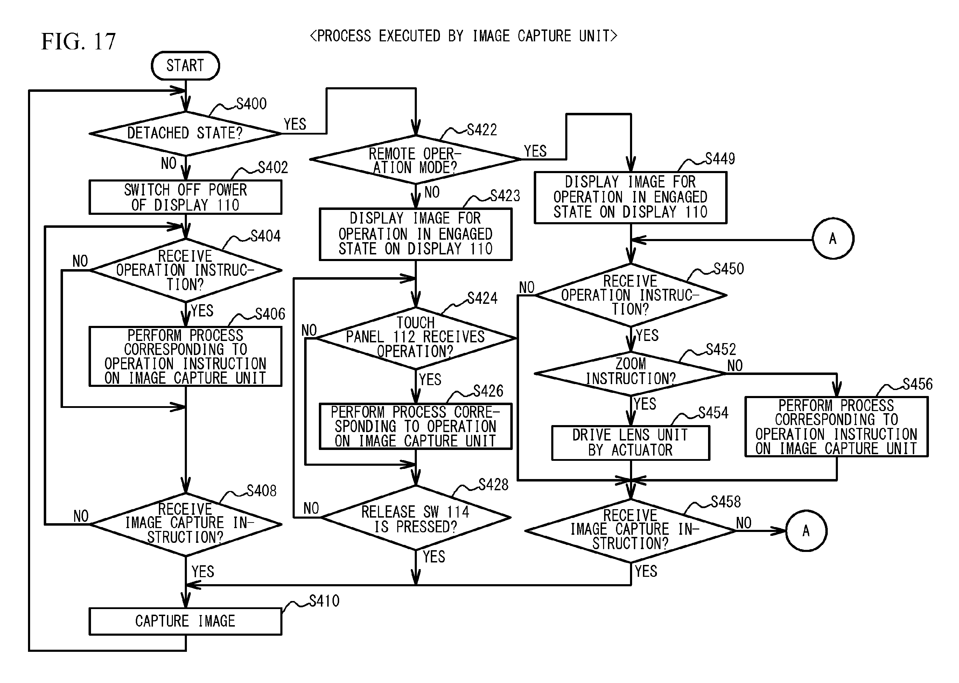

A description will next be given of the process executed by the control unit 224 of the display unit 200D and the process executed by the control unit 124 of the image capture unit 100D. FIG. 16 is a flowchart of an exemplary process executed by the control unit 224, and FIG. 17 is a flowchart of an exemplary process executed by the control unit 124. FIG. 16 and FIG. 17 illustrate only the process related to image capture. The second embodiment describes: (1) a case where the display unit 200D and the image capture unit 100D are in the engaged state; (2) a case where the display unit 200D and the image capture unit 100D are in the detached state and a remote operation mode is set; and (3) a case where the display unit 200D and the image capture unit 100D are in the detached state and the remote operation mode is not set. The remote operation mode is a mode used to remotely operates the image capture unit 100D by using the display unit 200D as a remote control, and when the remote operation mode is not set, the display unit 200D and the image capture unit 100D can be separately operated (used to capture images).

The electronic device 300D may be configured so that the remote operation mode is automatically set when the image capture unit 100D and the display unit 200D are in the detached state. This setting may be set at the time of product shipment or when the electronic device 300D starts being used. Additionally, the user may set the remote operation mode or ends the remote operation mode during the use of the electronic device 300D.

### (1) Case in the engaged state

In this case, in the process of FIG. 16, the determination at step S300 becomes NO. Thus the control unit 224 of the display unit 200D executes processes of steps S302 ∼ S310. Additionally, in the process of FIG. 17, the determination at step S400 becomes NO. Thus, the control unit 124 of the image capture unit 100D executes processes of steps S402 ∼ S410.

At step S302, the control unit 224 of the display unit 200D displays the image for operation used to operate the image capture unit 100D on the display 210. More specifically, as illustrated in FIG. 15A, the image for operation including the menu icon 210A and the cross icon 210B is displayed on the display 210. At step S302, as is clear from the comparison between FIG. 15A and FIG. 15C, the control unit 224 does not display a zoom icon (reference numeral 210C in FIG. 15C) on the display 210.

At subsequent step S304, the control unit 224 determines whether the touch panel 212 receives an operation from the user. When the determination is YES, i.e., when the touch panel 212 receives an operation from the user, the control unit 224 transmits an operation instruction to the image capture unit 100D at step S306, and moves to step S308. On the other hand, when the determination at step S304 is NO, i.e., when the touch panel 212 does not receive an operation from the user, the process moves to step S308.

At step S308, the control unit 224 determines whether the release SW 214 is pressed. When the determination is YES, the control unit 224 transmits an image capture instruction to the image capture unit 100D at step S310, and returns to step S300. On the other hand, when the determination at step S308 is NO, i.e., when the release SW 214 is not pressed, the control unit 224 returns to step S304.

On the other hand, the control unit 124 of the image capture unit 100D switches off the power of the display 110 at step S402. At step S402, the control unit 124 may shift the display 110 to a power saving mode. At subsequent step S404, whether an operation instruction is received from the control unit 224 of the display unit 200D is determined. When the determination is YES, the control unit 124 moves to step S406, performs the process corresponding to the operation instruction on the image capture unit 100D, and moves to step S408. In the engaged state, the zoom icon (210C) is not displayed on the display 110, and thus the operation instruction does not include a zoom operation. The user conducts the zoom operation by using the operation ring 126 in the engaged state.

On the other hand, when the determination at step S404 is NO, i.e., an operation instruction is not received from the control unit 224, the process skips step S406 and moves to step S408.

At step S408, the control unit 124 determines whether the release SW 214 of the display unit 200D is pressed and the control unit 124 thus receives an image capture instruction from the display unit 200D. When the determination is NO, the control unit 124 returns to step S404. On the other hand, when the image capture instruction is received and the determination at step S408 is thus YES, the control unit 124 captures an image at step S410, and returns to step S400.

### (2) Case where the remote operation mode is set in the detached state

In this case, in the process of FIG. 16, the determination at step S300 becomes YES, and the determination at step S320 becomes YES. Thus, the control unit 224 of the display unit 200D executes processes of steps S322 ∼ S332, S310. Additionally, in the process of FIG. 17, the determination at step S400 becomes YES, and the determination at step S422 becomes YES. Thus, the control unit 124 of the image capture unit 100D executes processes of steps S449 ∼ S458, S410.

At step S322, the control unit 224 of the display unit 200D displays, as illustrated in FIG. 15C, the image for operation including the menu icon 210A, the cross icon 210B, and the zoom icon 210C on the display 210. This allows the user to perform the operation for the zoom function of the image capture unit 100D from the display unit 200D that does not have an operation ring.

At subsequent step S324, the control unit 224 determines whether the touch panel 212 receives an operation from the user. When the determination is NO, i.e., when the touch panel 212 does not receive an operation from the user, the control unit 224 moves to step S332. On the other hand, when the operation from the user is received and thus the determination at step S324 becomes YES, the control unit 224 moves to step S326.

At step S326, the control unit 224 determines whether the operation received by the touch panel 212 is a zoom operation (whether the zoom icon 210C is operated). When the determination is YES, the control unit 224 transmits a zoom instruction to the control unit 124 of the image capture unit 100D at step S328, and moves to step S332. On the other hand, when the operation by the user is not a zoom operation and thus the determination at step S326 becomes NO, the control unit 224 transmits an operation instruction to the control unit 124 of the image capture unit 100D at step S330, and moves to step S332.

At step S332, the control unit 224 determines whether the release SW 214 is pressed. When the determination is YES, the control unit 224 transmits an image capture instruction to the control unit 124 of the image capture unit 100D at step S310, and returns to step S300. On the other hand, when the release SW 214 is not pressed and thus the determination at step S332 becomes NO, the control unit 224 returns to step S324.

On the other hand, the control unit 124 of the image capture unit 100D displays an image same as the image for operation displayed on the display 210 of the display unit 200D in the engaged state on the display 110 at step S449.

At subsequent step S450, the control unit 124 determines whether the control unit 124 receives an operation instruction from the control unit 224. When the determination is NO, the control unit 124 moves to step S458, and when the determination is YES, the control unit 124 moves to step S452.

At step S452, the control unit 124 determines whether the received operation instruction is a zoom instruction. When the determination is YES, the control unit 124 drives the lens unit 102 by the actuator 104A at step S454, and moves to step S458. On the other hand, when the determination is NO, i.e., when the operation instruction is not a zoom instruction, the control unit 124 performs the process corresponding to the operation instruction on the image capture unit 100D at step S456, and moves to step S458.

At step S458, the control unit 124 determines whether the control unit 124 receives an image capture instruction from the control unit 224. When the determination is NO, the control unit 124 returns to step S450. On the other hand, when the determination at step S458 is YES, i.e., when an image capture instruction is received, the control unit 124 captures an image at step S410, and returns to step S400.

### (3) Case where the remote operation mode is not set in the detached state

In this case, in the process of FIG. 16, the determination at step S300 becomes YES, and the determination at step S320 becomes NO. Thus, the control unit 224 of the display unit 200D executes the process of step S340. Additionally, in the process of FIG. 17, the determination at step S400 becomes YES, and the determination at step S422 becomes NO. Thus, the control unit 124 of the image capture unit 100D executes processes of steps S423 ∼ S428, S410.

At step S340, the control unit 224 of the display unit 200D displays an image used to operate the display unit 200D on the display 210.

On the other hand, the control unit 124 of the image capture unit 100D displays the image same as the image for operation displayed on the display 210 of the display unit 200D in the engaged state on the display 110 at step S423.

At subsequent step S424, the control unit 124 determines whether the touch panel 112 receives an operation. When the determination is YES, the control unit 124 performs the process corresponding to the operation on the image capture unit 100D at step S426, and moves to step S428. On the other hand, when the determination at step S424 is NO, the control unit 124 moves to step S428.

At step S428, the control unit 124 determines whether the release SW 114 of the image capture unit 100D is pressed. When the determination is YES, the control unit 124 captures an image at step S410 and returns to step S400. When the determination is NO, the control unit 124 returns to step S424.

As described above in detail, according to the second embodiment, the electronic device 300D includes the display unit 200D including the operation unit 211, and the image capture unit 100D attachable to/detachable from the display unit 200D. The control unit 224 makes an image for operation of the touch panel 212 included in the operation unit 211 in the state where the display unit 200D and the image capture unit 100D are attached to each other different from an image for operation of the touch panel 212 in the state where the display unit 200D and the image capture unit 100D are detached from each other. More specifically, when the display unit 200D and the image capture unit 100D are detached from each other, the control unit 224 displays the zoom icon 210C (not displayed in the engaged state) used to receive a zoom operation for the image capture unit 100D on the display 210. As described above, the zoom icon 210C is displayed on the display 210 of the display unit 200D, and thereby the zoom function of the image capture unit 100D can be operated from the display unit 200D in the detached state. That is to say, in the detached state, a function provided to the image capture unit 100D is achieved via the operation unit 211 of the display unit 200D, and thus the usability of the electronic device 300D is improved.

Additionally, in the second embodiment, the image capture unit 100D includes the operation ring 126, the lens unit 102 including a driving member, and the actuator 104A and the transmission mechanism 104B that drive the lens unit 102. When the display unit 200D and the image capture unit 100D are attached to each other, the lens unit 102 is driven by the transmission mechanism 104B via the operation ring 126, and when the display unit 200D and the image capture unit 100D are detached from each other, the lens unit 102 is driven by the actuator 104A via the touch panel 212. This allows for the intuitive zoom operation with the use of the operation ring 126 in the engaged state, and enables to remotely operate the zoom function provided to the image capture unit 100D from the display unit 200D in the detached state.

Additionally, in the second embodiment, the electronic device 300D has the different operation screens of the touch panel 212 included in the operation unit 211 in the state where the display unit 200D and the image capture unit 100D are detached from each other and in the state where the display unit 200D and the image capture unit 100D are attached to each other (FIG. 15A, FIG. 15C). As described above, the appropriate display both in the engaged state and in the detached state enables to improve the usability.

In the above second embodiment, the user operates the zoom function of the image capture unit 100D via the touch panel 212 of the display unit 200D when the remote operation mode is set, but this does not intend to suggest any limitation. For example, the user may change an aperture value or a shutter speed of the image capture unit 100D via the touch panel 212 of the display unit 200D.

In the above second embodiment, at step S410 or FIG. 17, the image capture unit 100D captures a still image in response to the operations of the release SWs 114, 214, but this does not intend to suggest any limitation. The image capture unit 100D may start to capture a moving image in response to the operations of the release SWs 114, 214.

In the above-described embodiments and variations, the control unit 224 may restrict items (functions) permitted to be operated when the image capture unit and the display unit are in the detached state and a user other than the owner of the electronic device operates the display unit. For example, operations related to image capture (operation to capture images, operations to change an aperture value/exposure) by a user other than the owner may be permitted, but operations related to reproduction (reproduction, editing) or operations such as registration of a new user may be restricted. The operation related to reproduction may not be restricted with respect to images captured in the detached state.

Additionally, in the above embodiments and variations, the control unit 124 may restrict items permitted to be operated when the image capture unit and the display unit are in the detached state and a user other than the owner of the electronic device operates the image capture unit. For example, operations related to image capture (operation to capture images, operation to change an aperture value/exposure) by a user other than the owner of the electronic device may be permitted, but operations related to reproduction (reproduction, editing) or operations such as registration of a new user may be restricted. Additionally, among operations related to image capture, the operation to change an aperture value/exposure may be restricted. This prevents the settings that the owner made from being changed without the owner's knowledge. The operation related to reproduction for images captured in the detached state may not be restricted.

When the image capture unit and the display unit are in the engaged state, items permitted to be operated by a user other than the owner of the electronic device may be restricted. In the above case, whether the operator of the image capture unit and the display unit is the owner may be determined by the input of a predetermined password, fingerprint authentication, or the like.

While the exemplary embodiments of the present invention have been illustrated in detail, the present invention is not limited to the above-mentioned embodiments, and other embodiments, variations and modifications may be made without departing from the scope of the present invention. The entire disclosure of the publication cited in the above description is incorporated herein by reference.

## Claims

1. An electronic device comprising:
a first unit including a first operation unit;
a second unit attachable to/detachable from the first unit; and
a control unit configured to make presentation of the first operation unit in a state where the first unit and the second unit are attached to each other different from presentation of the first operation unit in a state where the first unit and the second unit are detached from each other.

2. The electronic device according to claim 1, wherein
the first operation unit includes a touch panel.

3. The electronic device according to claim 2, wherein
the first operation unit displays an image used to receive an operation for a predetermined function of the second unit when the first unit and the second unit are detached from each other.

4. The electronic device according to claim 1, wherein
the second unit includes: a second operation unit; an optical system including a driving member; and a first drive unit and a second drive unit that drive the optical system,
the optical system is driven by the second drive unit via the second operation unit when the first unit and the second unit are attached to each other, and
the optical system is driven by the first drive unit via the first operation unit when the first unit and the second unit are detached from each other.

5. An electronic device comprising:
a first unit including a first operation unit; and
a second unit attachable to/detachable from the first unit, wherein
a configuration of the first operation unit in a state where the first unit and the second unit are detached from each other differs from a configuration of the first operation unit in a state where the first unit and the second unit are attached to each other.

6. An electronic device comprising:
a first unit including a first operation unit having a touch panel; and
a second unit including a second operation unit and being attachable to/detachable from the first unit, the second operation unit having a touch panel, wherein
presentation of the first operation unit differs from presentation of the second operation unit when the first unit and the second unit are detached from each other.

7. The electronic device according to any one of claims 1 to 6, further comprising:
a restriction unit configured to restrict an operation of the first unit when the first unit and the second unit are detached from each other.

8. The electronic device according to any one of claims 1 to 6, further comprising:
a restriction unit configured to restrict an operation of the second unit when the first unit and the second unit are detached from each other.

9. An electronic device attachable to/detachable from an apparatus that achieves a predetermined function, the electronic device comprising:
an operation unit;
a control unit configured to permit reception of an operation for the predetermined function via the operation unit when the electronic device is detached from the apparatus.

10. An electronic device comprising:
a first unit including an operation unit; and
a second unit including a display and being attachable to/detachable from the first unit, wherein
the second unit presents a configuration of the operation unit of the first unit on the display when the first unit and the second unit are detached from each other.

11. The electronic device according to claim 10, wherein
the display of the second unit includes a touch panel.

12. The electronic device according to claim 10, wherein
the operation unit includes a touch panel, and
the second unit displays presentation of the operation unit of the first unit on the display when the first unit and the second unit are detached from each other.

13. The electronic device according to claim 10, wherein
the operation unit includes a button member, and
the second unit displays an image of the button member of the operation unit of the first unit on the display in a manner that the button member is laid out in the first unit when the first unit and the second unit are detached from each other.

14. The electronic device according to claim 10, wherein
the second unit presents the configuration of the operation unit of the first unit on the display by enlarging or reducing when the first unit and the second unit are detached from each other.

15. The electronic device according to any one of claims 10 to 14, further comprising:
an image capture unit, wherein
each of the first unit and the second unit includes an image capture instruction unit that issues an instruction on image capture to the image capture unit.

16. The electronic device according to any one of claims 10 to t14, further comprising:
an engaging unit that engages the first unit with the second unit; and
a detection unit configured to detect an attachment/detachment of the first unit to/from the second unit in accordance with an engaged state of the engaging unit.

17. The electronic device according to claim 16, further comprising:
a communication unit configured to establish communication between the first unit and the second unit in a state where the first unit is engaged with the second unit.

18. The electronic device according to any one of claims 1 to 6 and 10 to 14, wherein
one of the first unit and the second unit includes:
a display capable of displaying an image;
a transmit unit configured to transmit data on the image to another of the first unit and the second unit before the image is displayed on the display; and
a receive unit configured to receive restriction information on display of the image from the device.

19. The electronic device according to claim 18, wherein
one of the first unit and the second unit includes an engaging unit capable of being engaged with the another of the first unit and the second unit, and
the transmit unit transmits the data on the image to the another of the first unit and the second unit when the engaging unit is not engaged with the another of the first unit and the second unit.

20. The electronic device according to claim 18, wherein
the transmit unit transmits, while a first image is displayed on the display, data on a second image to the another of the first unit and the second unit, a display order of the second image being posterior to a display order of the first image.

21. The electronic device according to claim 18, wherein
the transmit unit transmits data on a predetermined number of images to the another of the first unit and the second unit.

22. The electronic device according to claim 18, wherein
the transmit unit transmits data having a size less than a size of the image to be displayed as the data on the image.

23. The electronic device according to claim 19, wherein
the transmit unit and the receive unit communicate with the another of the first unit and the second unit via the engaging unit when the engaging unit is engaged with the another of the first unit and the second unit, and the transmit unit and the receive unit wireless communicate with the another of the first unit and the second unit when the engaging unit is not engaged with the another of the first unit and the second unit.

24. The electronic device according to claim 18, wherein
one of the first unit and the second unit includes a projection unit that projects the image, and
the transmit unit transmits the data on the image to the another of the first unit and the second unit before projection by the projection unit.

25. The electronic device according to any one of claims 1 to 6 and 10 to 14, wherein
one of the first unit and the second unit includes:
a setting unit configured to set restriction information for at least one of data on an image received from another of the first unit and the second unit and data on an image stored in a storing unit; and
a transmit unit configured to transmit the restriction information to the another of the first unit and the second unit.

26. The electronic device according to claim 25, wherein
the setting unit sets, while a first image is displayed on the another of the first unit and the second unit, the restriction information for a second image of which a display order is posterior to a display order of the first image.

27. The electronic device according to claim 25, wherein
the restriction information includes information that restricts display of the image.
